(19) **Europäisches Patentamt European Patent Office Office européen des brevets**

(11) **EP 2 648 017 B1**

(12) **FASCICULE DE BREVET EUROPEEN**

(45) Date de publication et mention de la délivrance du brevet:
**24.09.2014 Bulletin 2014/39**

(51) Int Cl.:
**G01S 19/15** (2010.01)   **G01S 19/20** (2010.01)
**G08G 5/02** (2006.01)

(21) Numéro de dépôt: **13161627.8**

(22) Date de dépôt: **28.03.2013**

(54) **Système embarqué d'aide au pilotage d'un aéronef, basé sur un système GNSS, à architecture redondante et dissimilaire pour niveau d'integrité élevé**

Bordsystem zur Unterstützung der Steuerung eines Luftschiffs, das auf einem GNSS-System mit redundanter und ungleichartiger Architektur für ein hohes Integritätsniveau beruht

On-board system for piloting an aircraft, based on a GNSS system, with redundant, dissimilar architecture for high level of integrity

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.04.2012 FR 1201028**

(43) Date de publication de la demande:
**09.10.2013 Bulletin 2013/41**

(73) Titulaire: **Thales**
**92200 Neuilly Sur Seine (FR)**

(72) Inventeurs:
• **Rollet, Stéphane**
**26120 Chabeuil (FR)**

• **Arethens, Jean-Pierre**
**26760 Beaumont-les-Valence (FR)**

(74) Mandataire: **Hammes, Pierre et al**
**Marks & Clerk France**
**Immeuble Visium**
**22, avenue Aristide Briand**
**94117 Arcueil Cedex (FR)**

(56) Documents cités:
**WO-A1-96/02905   US-A- 5 945 943**

• **TROMBONI P D ET AL: "Experiences in Data Analysis of a GBAS Approach Test", AEROSPACE CONFERENCE, 2007 IEEE, IEEE, PISCATAWAY, NJ, USA, 3 mars 2007 (2007-03-03), pages 1-9, XP031214137, ISBN: 978-1-4244-0524-4**

**Description**

L'invention a pour objet un système embarqué d'aide au pilotage d'un aéronef, de type connu sous l'acronyme anglo-saxon GLS (GNSS Landing System). En particulier, elle concerne l'aide au pilotage en phase d'approche, c'est-à-dire la phase qui précède l'atterrissage de l'aéronef.

Le domaine de l'invention est celui des systèmes d'aide au pilotage basés sur l'utilisation de systèmes GNSS.

Un système d'aide au pilotage de type GLS permet la fourniture d'écarts de guidage angulaire et métrique le long d'une trajectoire d'approche d'un aéronef vers une piste d'un aéroport d'une qualité suffisante pour permettre l'atterrissage et le roulage automatique de l'avion dans des conditions de visibilité quasi nulles.

Ces écarts de guidage sont élaborés à partir d'un positionnement en trois dimensions de l'aéronef obtenu grâce à un système GNSS (Global Navigation Satellite System) différentiel de type GBAS (Ground Based Augmentation System). Le positionnement fourni par le système GBAS est rapporté à la trajectoire idéale tridimensionnelle que doit suivre l'avion pour l'amener sur la piste.

En fonction du niveau de visibilité à l'atterrissage, plusieurs catégories de procédures d'approche sont définies. Une approche dite de catégorie I ne permet pas d'aller jusqu'à l'atterrissage mais uniquement d'approcher la zone d'atterrissage jusqu'à une hauteur dite de décision de 100 pieds. Une approche de catégorie I présente des exigences de sécurité quantifiées par un risque de fourniture de sorties erronées non détectées inférieure à $10^{-7}$ par heure.

Au contraire, pour une approche dite de catégorie III, se déroulant à proximité du sol, et dans des conditions de visibilité qui peuvent être très réduites, le système GLS doit garantir un taux de sorties erronées non détectées inférieur à $10^{-9}$ par heure. Par sorties, on entend l'ensemble des mesures d'écarts de guidage fournies par un système GLS pour l'aide à la navigation en phase d'approche.

Il existe donc un besoin pour concevoir un système GLS à très fort niveau d'intégrité garanti pour être compatible des besoins d'une phase d'approche de catégorie III.

Les solutions connues pour concevoir des systèmes GLS sont le plus souvent uniquement compatibles des procédures d'approche de catégorie I, c'est-à-dire qu'elles ne permettent pas de garantir un taux d'erreurs non détectées en sortie suffisamment faible.

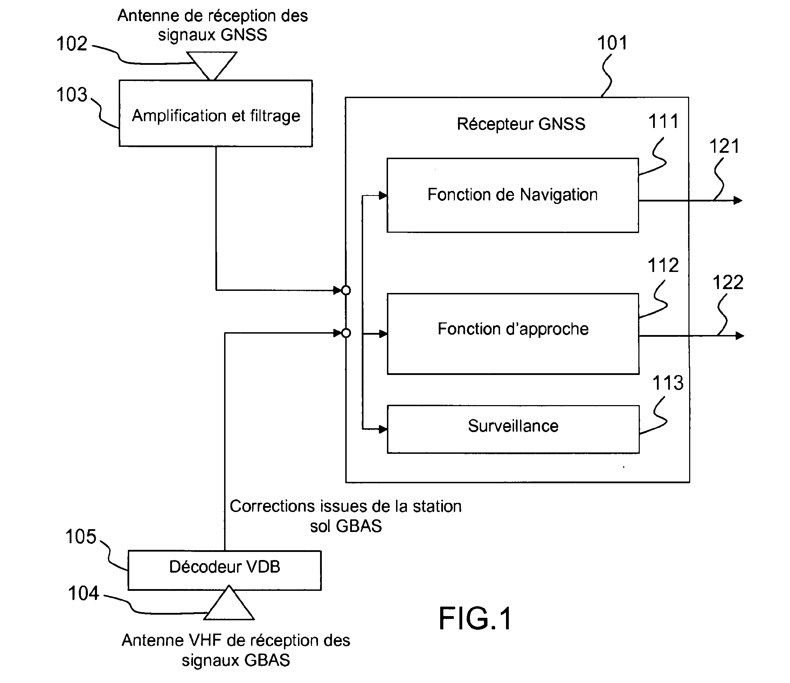

On distingue deux types d'architecture de systèmes GLS connus. Un premier type d'architecture, à base de récepteur GNSS simple chaîne, est représenté à la figure 1. Elle consiste essentiellement en un récepteur GNSS 101, par exemple de type GPS ou GPS/SBAS (Satellite Based Augmentation System) relié d'une part, par l'intermédiaire de moyens d'amplification et de filtrage 103, à une antenne 102 de réception de signaux de radionavigation par satellite GPS ou GPS/SBAS, et d'autre part à un décodeur 105 de type VDB (VHF Data Broadcast) qui reçoit, par l'intermédiaire d'une antenne VHF 104, des signaux de type GBAS (Ground Based Augmentation System) émis par une station au sol. Le décodeur VDB 105 transmet au récepteur GNSS 101 un ensemble de corrections, encore appelées données d'augmentation, qui permettent d'améliorer la fiabilité des signaux GNSS par ailleurs reçus via l'antenne 102. Le récepteur GNSS 101 réalise, à partir des signaux GNSS et des corrections GBAS, d'une part une fonction de navigation 111 et d'autre part une fonction d'approche 112 ainsi qu'une fonction de surveillance 113. La fonction de navigation 111 délivre en sortie un ensemble de mesures de Position, Vitesse et Temps permettant l'aide à la navigation.

La fonction d'approche 112 délivre en sortie un ensemble de mesures similaires ou de déviations permettant l'aide à l'atterrissage en phase d'approche.

Enfin, la fonction de surveillance 113 est utilisée pour garantir un risque d'intégrité adapté à des opérations à criticité limité, par exemple des opérations de type « Major » pour la navigation ou « Hazardous » pour l'approche. Pour ce type d'opérations, le risque d'intégrité lié à une panne matérielle du récepteur doit être limité à $10^{-7}$/ h comme expliqué ci-dessus.

Une solution simple chaine du type de celle représentée à la figure 1 ne permet pas de répondre aux exigences de sécurité des opérations dont le niveau de risque d'intégrité est plus contraignant, par exemple des opérations classées « catastrophic » pour lesquelles le risque d'intégrité doit être inférieur à $10^{-9}$/ h. En effet, pour atteindre de telles exigences de sécurité, il faut que la probabilité qu'une panne simple entraine un défaut d'intégrité soit négligeable par rapport au risque d'intégrité de $10^{-9}$/ h. En prenant un facteur 1000, la probabilité d'apparition d'une panne simple impactant l'intégrité devrait être inférieure à $10^{-12}$/ h, ce qui n'est pas atteignable. Les solutions basées sur l'utilisation d'une chaine simple ne sont pas protégées contre une panne simple car elles ne définissent pas de moyen de surveillance externe permettant de détecter cette panne. Les approches de catégorie III sont classées « catastrophic » et ne peuvent donc être mises en oeuvre par ce type de solution simple chaine.

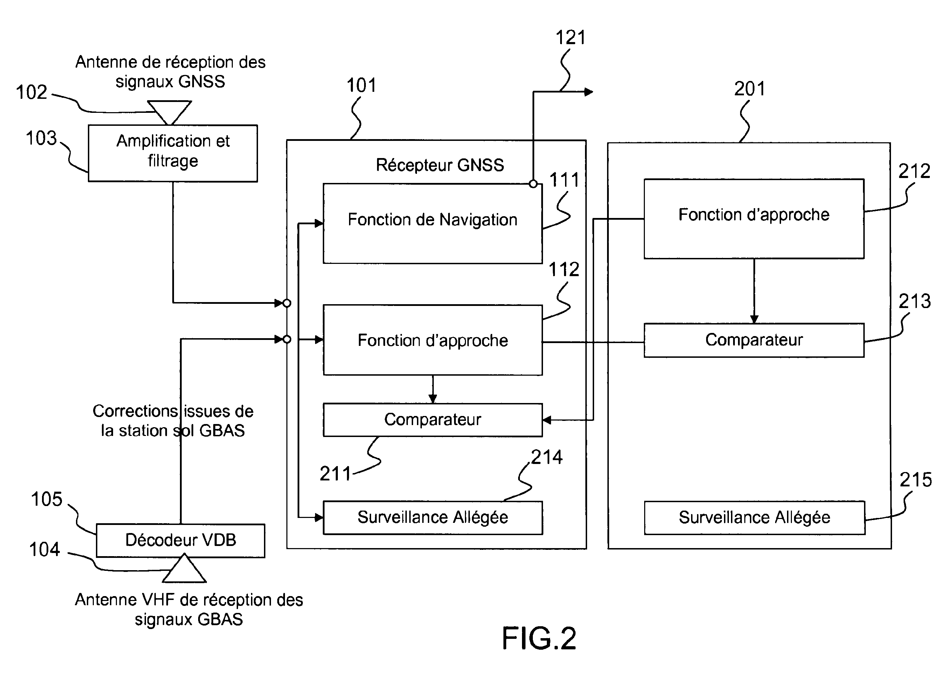

Un second type d'architecture, basé sur un mécanisme de double chaîne de modules GNSS est représenté à la figure 2. Les éléments identiques aux architectures des figures 1 et 2 sont identifiés par les mêmes références. Une telle architecture est divulguée dans US 5945943.

Un second module GNSS 201, encore appelé seconde chaine, est associé au premier récepteur GNSS 101 afin d'améliorer l'intégrité de l'ensemble. Pour cela, une comparaison croisée des sorties de chaque fonction d'approche 112,212 est réalisée via deux comparateurs 211,213. Un critère simple permet de supprimer les mesures d'écarts de guidage qui sont trop dissemblables entre les deux modules. Une surveillance allégée 214,215 est réalisée dans chaque module GNSS 101,201 mais elle ne permet de garantir un risque d'intégrité adapté que pour des opérations de catégorie I.

La deuxième chaine 201 constitue un mécanisme de surveillance externe de la première chaine 101, cependant cette solution ne garantie pas l'indépendance des deux chaines. En effet, mettre deux chaînes en parallèle sans s'assurer de leur dissimilarité protège seulement des défauts d'intégrité liés à de la variabilité en fabrication et en fiabilité des composants mais ne garantit pas la détection des défauts d'intégrité liés à des erreurs de conception révélées par un même événement externe. On peut citer comme exemples d'évènements externes non détectés par la solution de la figure 2:

- Défaillance de composants électroniques liée à un environnement spécifique en vibration, en accélération ou en température : dans les récepteurs GNSS, les filtres, oscillateurs, amplificateurs sont sensibles à ces phénomènes et peuvent entraîner des défauts d'intégrité,

- Défaillance des fonctions d'alimentation liée à un fonctionnement perturbé des étages d'alimentation primaire alimentant les deux récepteurs 101,201,

- Défaillance des fonctions GNSS liée à une configuration spécifique et inattendue par le récepteur du système GNSS, par exemple concernant la modulation du signal, le Doppler perçu par le récepteur, la géométrie spécifique de la constellation ou un instant particulier de réception des signaux,

- Défaillance des fonctions GNSS liée à une configuration spécifique et inattendue par le récepteur de l'avion

- Défaillance des fonctions GNSS liée à un environnement spécifique et inattendu (dynamique, attitude, position, temps courant...) par le récepteur d'interférence et/ou de trajets multiples,

- Défaillance des fonctions d'approche liée à une configuration spécifique et inattendue par le récepteur de la station sol et des corrections émises (identification, authentification, segment d'approche (FAS), corrections émises...),

Pour l'ensemble des exemples donnés précédemment, un événement unique peut révéler un même défaut de conception sur les deux chaînes 101,201, rendant complètement inopérant les fonctions de comparaison, car les deux chaînes peuvent produire un défaut d'intégrité fortement similaire et par conséquent non détectable par un simple comparateur.

Cette faiblesse est rédhibitoire pour des opérations d'approche de catégorie III classées « Catastrophic » pour deux raisons. Tout d'abord, une panne simple peut entraîner une erreur non détecté en sortie de la chaîne double. D'autre part, la dépendance des deux chaînes à des pannes communes limite considérablement le gain atteignable sur le risque d'intégrité et ne permet pas d'atteindre le taux de pannes non détectées de $10^{-9}$/h attendu.

Ce problème peut être illustré par l'équation suivante, et en introduisant les variables suivantes :

- HMI le risque d'intégrité assuré,

- $HMI_c$ le risque d'intégrité commun aux deux récepteurs, lié à des défauts de conception,

- $HMI_{Rx1}$ le risque d'intégrité propre au premier récepteur 101,

- $HMI_{Rx2}$ le risque d'intégrité propre au second récepteur 201,

- P la probabilité de non-détection d'un défaut d'intégrité par comparaison des résultats fournis par les deux récepteurs 101,201,

On a:

$$HMI = HMI_c + P.\left(HMI_{Rx1} + HMI_{Rx2} + HMI_{Rx1}.HMI_{Rx2}\right)$$

L'équation ci-dessus traduit le fait que le principe de chaîne double ne permet de réduire que les risques d'intégrité $HMI_{Rx1}$, $HMI_{Rx2}$ indépendants entre les deux récepteurs 101,201 en agissant sur la probabilité P. Par contre les risques d'intégrités communs $HMI_c$ ne peuvent pas être supprimés.

Ainsi, les solutions existantes ne permettent pas de limiter le risque d'intégrité au niveau de sécurité nécessaire à l'opération d'approche de catégorie III.

L'invention vise à concevoir un système GLS qui permet d'obtenir le niveau d'intégrité suffisant pour garantir le risque de fourniture d'une information erronée non détectée au niveau souhaitée pour des opérations d'approche de catégorie III.

L'invention permet également d'éviter qu'une panne simple ne génère une information erronée non détectée.

L'invention a ainsi pour objet un dispositif de réception de signaux de radio-navigation, pour l'aide au pilotage d'un aéronef, caractérisé en ce qu'il comprend un premier module GNSS maitre et un second module GNSS esclave dissimilaires, le premier module GNSS maitre comprenant un premier moyen de traitement des signaux de radio-navigation et un premier moyen de calcul de données de guidage à partir des mesures fournies par ledit premier moyen de traitement des signaux, le second module GNSS esclave comprenant un second moyen de traitement des signaux de radio-navigation et un second moyen de calcul de données de guidage à partir des mesures fournies par ledit second moyen de traitement des signaux, chaque module GNSS comprenant en outre un moyen de comparaison entre les sorties $X_{g1}$, $X_{g2}$ desdits premier et second moyen de calcul de données de guidage adapté à exécuter le test d'intégrité suivant :

$$\left| X_{g1} - X_{g2} \right| > K_g \sqrt{Variance(X_{g1} - X_{g2})}$$

et à conclure à un défaut d'intégrité si ledit test d'intégrité est vérifié, Kg étant un seuil de détection prédéterminé de sorte à obtenir une probabilité donnée $P_{nd}$ de détection d'une erreur impactant l'une ou l'autre, ou les deux mesures $X_{g1}$, $X_{g2}$ simultanément et une probabilité de fausse alarme $P_{fa}$ donnée.

Selon un aspect particulier de l'invention, le seuil de détection Kg est déterminé à partir des deux inégalités suivantes :

$$\int_{K_g}^{\infty} \frac{1}{\sqrt{2\pi}} e^{-\frac{x^2}{2}} .dx \leq P_{fa}$$

et

$$P_{nd} \leq \int_{-\infty}^{K_g \frac{VAL}{\sqrt{\max\left(Variance(X_{g1}), Variance(X_{g2})\right) - Covariance(X_{g1}, X_{g2})}}} \frac{1}{\sqrt{2\pi}} e^{-\frac{u^2}{2}} .du ,$$

avec VAL la valeur limite tolérable d'erreur sur l'une des mesures $X_{g1}$, $X_{g2}$ en dessous de laquelle l'intégrité desdites mesures est garantie.

Selon un autre aspect particulier de l'invention, les sources communes d'erreur entre le premier module GNSS maitre et le second module GNSS esclave sont éliminées du calcul de la variance de la différence entre les sorties $X_{g1}$, $X_{g2}$ desdits premier et second moyen de calcul de données de guidage.

Dans un mode particulier de réalisation de l'invention, les données de guidage sont au moins égales à l'une des données suivantes : la position horizontale, la déviation latérale, la déviation rectilinéaire latérale, la déviation verticale, la déviation rectilinéaire verticale ou la distance au seuil de piste.

Dans une variante de réalisation de l'invention, le moyen de comparaison exécute au préalable une étape de compensation, sur la donnée de guidage de position horizontale, de l'asynchronisme entre le premier module GNSS maitre et le second module GNSS esclave.

L'asynchronisme est, par exemple, compensé en calculant la différence $\Delta POS$ des positions horizontales $P_a, P_b$ fournies par les premier et second moyen de calcul de données de guidage comme suit :

$$\Delta POS = P_b - P_a - V_a.(T_b - T_a)$$

avec $V_a$ une mesure de vitesse fournie par le premier moyen de calcul de données de guidage, $T_a$ une mesure de temps fournie par le premier moyen de calcul de données de guidage et $T_b$ une mesure de temps fournie par le second moyen de calcul de données de guidage.

L'asynchronisme peut aussi être compensé en synchronisant, les données de guidage calculées sur une composante caractéristique du signal de radio-navigation reçu.

Selon un autre aspect particulier de l'invention, les premier et second modules GNSS présentent une dissimilarité matérielle et/ou logicielle.

Selon un autre aspect particulier de l'invention, les premier et second modules GNSS sont similaires matériellement mais mettent en oeuvre les traitements numériques dissimilaires suivants : filtrages numériques différents, corrélateurs différents, allocation de plans de fréquences différents.

Dans une variante de réalisation, le dispositif selon l'invention comprend une antenne et un préamplificateur distincts pour alimenter chaque module GNSS de sorte à limiter les sources communes de défaut d'intégrité.

Dans une autre variante de réalisation de l'invention, le test d'intégrité est modifié comme suit :

$$\left| X_{g1} - X_{g2} \right| > K_g . \sqrt{Variance(X_{g1} - X_{g2})} + b$$

avec b un biais de mesure calculé à partir de la connaissance a priori de la distance entre les deux antennes.

Dans une autre variante de réalisation, le dispositif selon l'invention comprend une antenne, un moyen de division de la puissance du signal reçu par l'antenne et deux préamplificateurs distincts pour alimenter chaque module GNSS de sorte à limiter les sources communes de défaut d'intégrité.

L'invention a également pour objet un récepteur multimode pour l'aide à la navigation d'un aéronef comprenant un système d'atterrissage aux instruments ILS et un dispositif de réception de signaux de radio-navigation selon l'invention pour la mise en oeuvre d'une fonction d'aide à l'atterrissage GLS en phase d'approche.

L'invention a encore pour objet un système hybride d'aide à la navigation comprenant un récepteur multimode comprenant un système d'atterrissage aux instruments ILS et un système inertiel à hybridation GNSS-IRS comprenant un système inertiel IRS produisant des données inertielles et un moyen d'hybridation de données de navigation GNSS par lesdites données inertielles, caractérisé en ce qu'il comporte en outre un dispositif de réception de signaux de radio-navigation selon l'invention dont le premier module GNSS maitre est intégré dans ledit système inertiel pour fournir lesdites données de navigation GNSS et le second module GNSS esclave est intégré dans ledit récepteur multimode.

D'autres caractéristiques et avantages de la présente invention apparaîtront mieux à la lecture de la description qui suit en relation aux dessins annexés qui représentent :

- La figure 1, l'architecture d'un système GLS simple chaine selon l'art antérieur,
- La figure 2, l'architecture d'un système GLS double chaine selon l'art antérieur pour des opérations d'approche de catégorie I,
- La figure 3, l'architecture d'un équipement MMR selon l'art antérieur,
- La figure 4, l'architecture d'un système GLS selon l'invention dans un premier mode de réalisation relatif à sa mise en oeuvre dans un équipement MMR,
- La figure 5, l'architecture d'un système GLS selon l'invention dans un deuxième mode de réalisation relatif à sa mise en oeuvre dans un équipement GIRS,
- La figure 6, l'architecture d'un système GLS selon l'invention dans un troisième mode de réalisation relatif à sa mise en oeuvre dans un récepteur GNSS autonome,
- La figure 7, un schéma illustrant le calcul de la variance d'erreur sur la position horizontale pour la mise en oeuvre de la fonction de comparaison des données de guidage délivrées par chaque chaine GNSS du système selon l'invention,
- Les figures 8a,8b,8c, trois exemples d'architectures mono ou bi antennes pour système GLS simple ou double chaine,
- La figure 9, une illustration des paramètres nécessaires à l'établissement d'une phase d'approche.

*Architecture connue d'un récepteur multimode MMR implémentant une fonction d'aide à l'approche GLS*

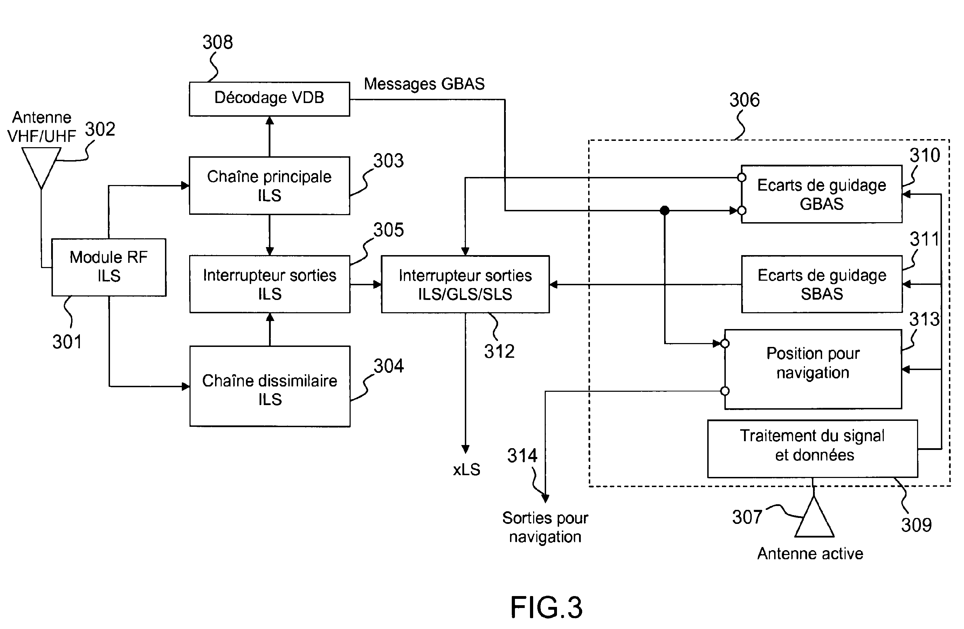

La figure 3 schématise l'architecture connue d'un récepteur multimode MMR pour la mise en oeuvre de fonctions d'aide à la navigation et à l'atterrissage, notamment en phase d'approche.

La fourniture d'écart de guidage permettant le contrôle automatique de l'avion pour des phases d'approche et atterrissage de catégorie III n'est actuellement possible qu'en traitant à bord de l'avion des signaux radio électriques émis par des balises sols dans le cadre de mécanismes d'atterrissage de type ILS (Instrument Landing System) ou MLS (Microwave Landing System). Ces signaux sont traités par des récepteurs de signaux VHF (Very High Frequency) et UHF (Ultra High Frequency) composés d'un module de réception analogique 301 qui permet de convertir et numériser les signaux radioélectriques reçus par une antenne VHF ou UHF 302, et d'un module de calcul 303,304 qui permet la transformation des signaux numérisés en mesures d'écart de guidage transmis aux systèmes utilisateurs au moyen d'un bus de communication numérique. Ces modules de traitement sont communément intégrés dans un équipement dit MMR (Multi Mode Receiver).

Pour garantir l'intégrité du signal de sortie, et compte tenu de la fiabilité limitée des éléments de calculs numériques, le module de calcul des écarts de guidage est en général constitué de deux calculateurs différents 303,304 dont les éléments sont comparés en continu, par un comparateur 305, pour détecter les anomalies de fonctionnement. Pour éviter le risque de mode commun aux deux calculateurs 303,304, des dissimilarités matérielles et logicielles sont amenées dans la conception de ces deux calculateurs.

Un équipement MMR est par ailleurs également destiné à supporter la fonction d'aide à l'atterrissage GLS. Pour cela il intègre en plus des modules nécessaires à la fourniture des informations de guidages en mode ILS ou MLS, un module GNSS 306 qui reçoit les signaux émis par les satellites de radionavigation par le biais d'une antenne satellite 307, ainsi qu'un module VDB 308 qui permet la réception des messages émis par une station sol GBAS.

La localisation autonome issue de la réception des signaux satellites n'a pas les performances suffisantes pour guider l'avion pendant la phase d'approche et atterrissage. Le rôle de la station sol GBAS est principalement de diffuser des messages de corrections nécessaires à l'augmentation de performance d'un récepteur GNSS autonome, ainsi que de diffuser les trajectoires d'approches utilisables sur un aéroport à un moment donné.

La fonction GLS n'est utilisable, dans les systèmes actuels, que pour supporter des opérations d'approche dite de catégorie I qui sont d'une moindre criticité que les opérations de catégorie III, et pour lesquels les exigences de sécurité sont moins contraignantes La fonction GLS est donc supportée par un calculateur GNSS simple chaîne, comportant un module analogique radio fréquence (non représenté) permettant d'amplifier et de numériser les signaux radio électrique émis par les satellites, et un module de calcul 309 permettant d'extraire des signaux numérisés les données émises par les satellites et les mesures de distance à ces satellites afin de fournir des mesures d'écarts de guidage 310. Alternativement, un système d'augmentation par satellite SBAS peut également être exploité pour fournir des mesures d'écarts de guidage 311 alternatives. Le choix est laissé à l'utilisateur, par le biais d'un interrupteur de sorties 312 qui permet de commuter sur les mesures d'écarts de guidage respectivement fournies par le système ILS, le système GLS augmenté via un système GBAS ou le système GLS augmenté via un système SBAS. Enfin, le récepteur GNSS 306 comporte également un module de calcul de position pour la navigation 313 qui bénéficie également des corrections apportées par les systèmes GBAS ou SBAS. Les mesures fournies par la navigation ne concernent cependant pas la phase d'approche et sont introduites à titre indicatif.

Les messages issus d'un système d'augmentation GBAS et transmis par une station sol contiennent notamment les informations suivantes, dans le cas spécifique d'un système de radionavigation GPS :

- des corrections émises par une station sol GPS monofréquence L1 qui permettent, lorsqu'elles sont appliquées aux signaux GPS de fréquence L1 reçus à bord de l'avion, de garantir la précision et l'intégrité requise pour des approches de catégorie I à III,

- les données définissant le chemin que doit suivre l'avion en phase d'approche et d'atterrissage. Ce chemin est utilisé par le récepteur GPS pour déterminer l'écart latéral et vertical entre la position calculée de l'avion et le chemin à suivre.

Ces messages GBAS sont émis en fréquence VHF, reçus par l'antenne VHF 302 du système MMR, démodulé par le module analogique 301 et décodés par le décodeur VDB 308.

Le récepteur émet des écarts de guidage latéral et vertical « GLS GAST-C » (pour des approches de catégorie I) ou « GLS GAST-D » (pour des approches de catégorie I à III).

Le récepteur MMR choisit, par le biais de l'interrupteur 312, entre les différentes sources d'écart de guidage sur commande du pilote de l'avion entre des écarts calculés à partir du faisceau ILS (ou MLS), des écarts calculés à partir de données satellite GPS corrigées par des données satellite SBAS (SLS) et des écarts calculés à partir de données satellite GPS corrigées par des données de la station sol de l'aéroport GBAS (GLS).

Le récepteur GNSS 306 émet des sorties pour la navigation 314 constituées d'une position horizontale pour localiser l'avion et d'une vitesse utilisée par les fonctions ADS-B (« Automatic Dependent Surveillance Broadcast ») de l'avion. Ces sorties pour la navigation 314 sont actuellement calculées à partir des signaux GPS monofréquence L1 reçus corrigés soit par les données de la station sol GBAS, soit par les données satellite SBAS en fonction de leur disponibilité.

De nouvelles constellations, par exemple celles du système européen GALILEO, et de nouvelles fréquences d'émission des satellites (fréquence L5 en plus de la fréquence L1) permettent d'améliorer la disponibilité, la précision, la continuité et l'intégrité de la localisation et de la vitesse de l'avion.

Comme déjà explicité ci-dessus, l'architecture mono chaîne selon la figure 3 vis à vis de la fonction GLS ne permet pas de délivrer les signaux à haute intégrité capable de supporter des approches de type catégorie III, compte tenu du risque d'erreur non détectée du module GNSS 306.

*Architecture d'un récepteur multimode MMR implémentant une fonction d'aide à l'approche GLS à fort niveau d'intégrité selon l'invention*

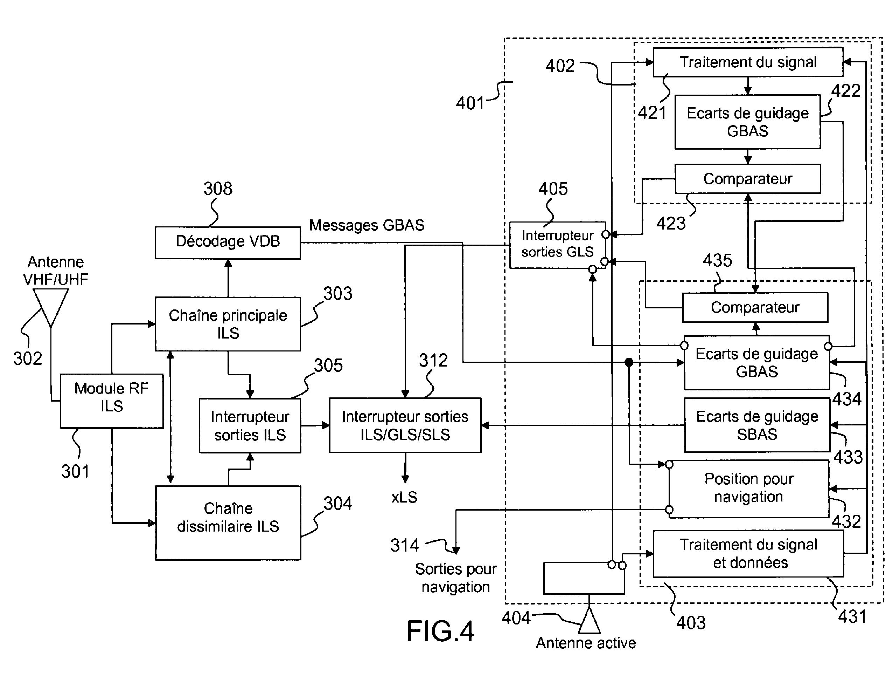

La figure 4 décrit l'architecture d'un récepteur MMR selon l'invention implémentant une fonction d'aide à la navigation GLS. Les éléments communs entre les architectures des figures 3 et 4 sont identifiés par les mêmes références.

Le récepteur GNSS 306 de l'architecture représentée à la figure 3 est remplacé par un récepteur GNSS 401, selon l'invention, qui s'intègre dans la structure habituelle d'un dispositif MMR existant pour le rendre compatible des capacités d'approche et d'atterrissage en mode GLS catégorie III.

Le récepteur GNSS 401 comprend deux modules GNSS 402,403, dissimilaires, fonctionnant selon une configuration maitre-esclave.

Le récepteur GNSS 401 est conçu sur la base d'une carte support qui supporte physiquement les deux modules GNSS, 402,403 et qui assure l'interface mécanique et électrique du module avec l'équipement hôte. Par interface électrique, on entend notamment les alimentations du module, la connexion antenne, les bus de données numériques et les entrées/sorties discrets numériques. Cette carte intègre un interrupteur 405 sur le bus numérique qui achemine les informations calculées pour les besoins de la fonction d'aide à l'atterrissage GLS. Cet interrupteur 405 est activé par un « ou logique » de discrets de commandes produites par chacun des deux modules GNSS 402,403.

Un premier module GNSS 403 maître est adapté à recevoir et traiter des signaux GNSS en provenance de plusieurs constellations de satellites de radionavigation, par exemple les constellations du système GPS ou celles du système GALILEO, et émis sur plusieurs fréquences différentes. Il comprend au moins, un module 431 de traitement du signal de radionavigation et d'extraction des données de radionavigation GNSS ou GNSS augmentées par un système SBAS. A partir des mesures fournies par ce premier module 431 de traitement de signal, un deuxième module 432 exploite ces mesures pour fournir des informations de position utiles pour l'aide à la navigation, un troisième module 433 délivre des données de guidage à partir des mesures GNSS augmentées par les corrections fournies par un système d'augmentation SBAS et un quatrième module 434 délivre des données de guidage à partir des mesures GNSS augmentées par les corrections fournies par un système d'augmentation au sol GBAS.

L'invention concerne plus précisément le quatrième module 434 dont les sorties sont exploitées pour mettre en oeuvre la fonction d'aide en procédure d'approche GLS.

Un second module GNSS 402, fonctionnant en mode esclave par rapport au premier module GNSS 403, comporte également un module 421 de traitement de signal de radionavigation et d'extraction des données de radionavigation GNSS et un module 422 qui délivre des données de guidage à partir des mesures GNSS augmentées par les corrections fournies par un système d'augmentation au sol GBAS.

Avantageusement le second module GNSS 402 est un module compatible d'un seul type de constellations GNSS et d'une seule fréquence. La fonction première de ce module esclave 402 est le contrôle de la chaîne primaire 403 de la fonction d'approche GLS.

Chaque module GNSS comporte en outre un comparateur 435,423 apte à comparer les données de guidage fournies par chaque module. Une comparaison croisée est ainsi réalisée, chaque comparateur 435,423 délivrant une information en direction de l'interrupteur 405 concernant l'intégrité de la mesure délivrée par le module 434 de calcul de données de guidage du module GNSS 403 maitre. Une comparaison croisée est réalisée afin de se prémunir contre une panne impactant l'un des deux comparateurs 423,435. Dans le cas d'utilisation d'un seul comparateur, une panne sur ce comparateur peut entraîner l'absence de signalement d'un défaut d'intégrité sur la sortie des données de guidage.

Avantageusement, le module GNSS 403 maitre fournit au module GNSS 402 esclave, l'ensemble des données permettant de le faire fonctionner en mode esclave.

La carte support du récepteur GNSS 401 selon l'invention assure également la communication entre l'ensemble des fonctions implémentées entre les deux modules GNSS 402,403.

*Traitements nécessaires au fonctionnement du module GNSS maitre 403*

Le module GNSS maitre 403 effectue tous les traitements nécessaires à un fonctionnement autonome d'un récepteur GNSS. En particulier, il exécute l'acquisition et la poursuite des signaux multi fréquence et multi constellation, le décodage des messages GNSS, le calcul de la position pour la navigation, ainsi que le calcul de la position et des écarts de guidage GBAS.

Pour l'élaboration des écarts de guidage GBAS, le module GNSS maitre 403 doit mettre en oeuvre l'ensemble des traitements standards qu'on rappelle ici. En particulier il doit réaliser le filtrage, l'amplification et l'échantillonnage du signal de radionavigation reçu, l'identification de la liste des satellites GNSS visibles par le récepteur à partir des données à disposition du récepteur (almanachs ou éphémérides issus des messages décodés transmis par les satellites GNSS, position estimée connu de l'avion...). Le module GNSS maitre 403 doit en outre rechercher et poursuivre les signaux GNSS des satellites GNSS visibles à l'aide d'une réplique locale du signal à recevoir, élaborer les mesures de pseudo-distance nécessaires au calcul des données de position vitesse temps, encore appelées données PVT, à partir de la phase porteuse et de la phase code de la réplique locale asservie sur le signal reçu, démoduler et extraire les messages transmis par les signaux GNSS qui contiennent les paramètres nécessaires au calcul de la position exacte du satellite reçu (éphémérides et paramètres d'horloge satellite), vérifier l'intégrité des messages VDB décodés à l'aide des données contenues dans le message VDB, corriger et identifier les pseudo-distances valides à l'aide des données contenues dans le message VDB, calculer et valider la solution de données PVT (Position, Vitesse et Temps) à partir des pseudo-distances corrigées, estimer l'incertitude des données PVT calculées, calculer la déviation latérale et verticale entre la solution PVT calculée et le chemin d'approche décrit dans le message VDB. Enfin le comparateur 435 doit contrôler la validité des mesures de déviation en comparant les données calculées par le récepteur maitre 403 aux données calculées par le récepteur esclave 402.

*Fonctionnement maitre-esclave entre les deux modules GNSS 402, 403.*

Le module GNSS 403 maitre transmet au module GNSS 402 esclave certaines informations de façon à ce qu'il n'ait pas à mettre en oeuvre des traitements redondants déjà exécutés par le module maitre. En particulier, la liste des satellites visibles est transmise au module esclave ainsi que les messages extraits des signaux GNSS reçus, tels les éphémérides et les paramètres d'horloge satellite.

A partir de ces informations, le module GNSS 402 esclave réalise les traitements suivants : le filtrage, l'amplification et l'échantillonnage de la bande fréquentielle GNSS, la recherche et la poursuite des signaux GNSS des satellites visibles, en fonction des données transmises par le module maitre 403 et à l'aide d'une réplique locale du signal à recevoir. Le module esclave élabore ensuite les mesures de pseudo-distances nécessaires au calcul PVT pour la fonction GLS à partir de la phase porteuse et de la phase code de la réplique locale asservie sur le signal reçu. Il vérifie l'intégrité des messages issus du module maitre 403 à l'aide des données contenues dans le message VDB, corrige et identifie les pseudo-distances valides à l'aide des données contenues dans le message VDB, calcule et valide les mesures PVT à partir des pseudo-distances corrigées, estime l'incertitude impactant les mesures PVT calculées, calcule la déviation latérale et verticale entre la mesure PVT calculée et le chemin d'approche décrit dans le message VDB et enfin contrôle la validité de la déviation latérale en comparant 423 les données calculées par ce module esclave 402 aux données calculées par le module maitre 403.

Afin d'assurer un fonctionnement optimal, les traitements redondants entre les deux modules GNSS sont supprimées. En particulier, les traitements réalisés par le module GNSS esclave 402 ne servent qu'à vérifier l'intégrité des données de guidage GLS fournis avec un temps d'alerte inférieur à un temps prédéterminé de l'ordre de deux secondes.

En particulier, les contraintes de filtrage (en largeur de bande, en raideur de la réjection hors bande et en variation de temps de groupe dans la bande) et les contraintes sur le corrélateur utilisé pour asservir les signaux locaux générés par le récepteur aux signaux GNSS transmis par les satellites peuvent être relâchées. En outre, la contrainte de période de rafraîchissement des calculs de mesure PVT et de déviation à peut également être relâchée et ramenée à une période compatible du temps d'alerte de deux secondes.

Ainsi, le second module GNSS 402 n'effectue que les traitements nécessaires pour élaborer un deuxième jeu de données de guidage pour comparaison avec le premier jeu fourni par le premier module 403 dans un but de renforcer l'intégrité de ces mesures.

Chacun des deux modules 402,403 effectue la comparaison croisée des mesures fournies pour commander l'interrupteur 405 de coupure d'émission des déviations GLS.

L'architecture proposée reste valide aussi bien dans le cas où le récepteur fournirait directement les déviations GLS ou bien dans le cas où le récepteur fournirait les positions différentielles corrigées par les données GBAS. Dans ce dernier cas, le calcul des déviations et le contrôle des déviations calculées est réalisé respectivement dans les calculateurs 303,304 du système ILS.

Le récepteur GNSS 401 selon l'invention est avantageusement adapté à une intégration dans un dispositif multi mode MMR dont l'architecture est décrite à la figure 4.

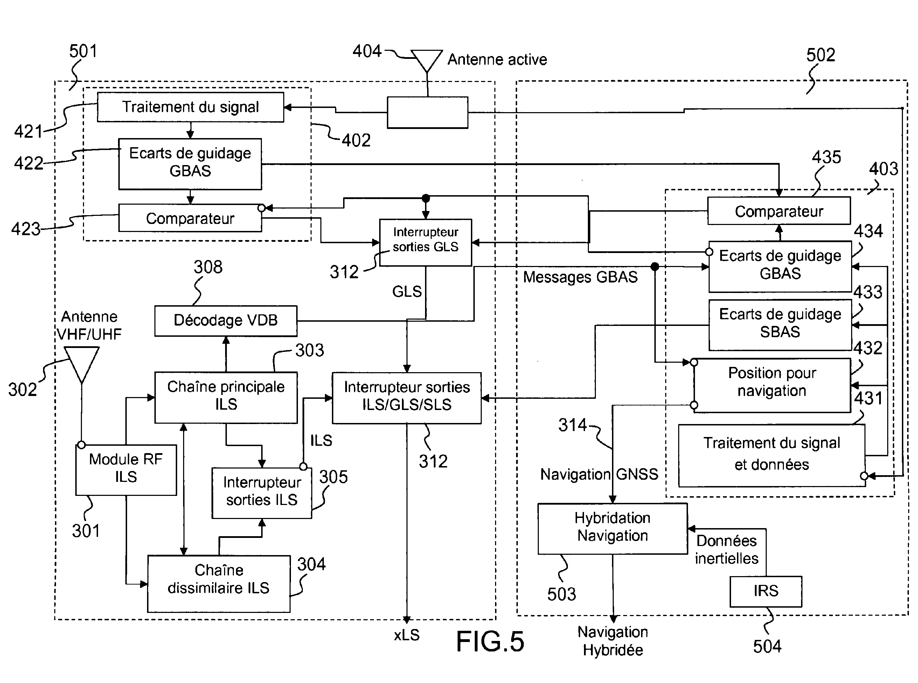

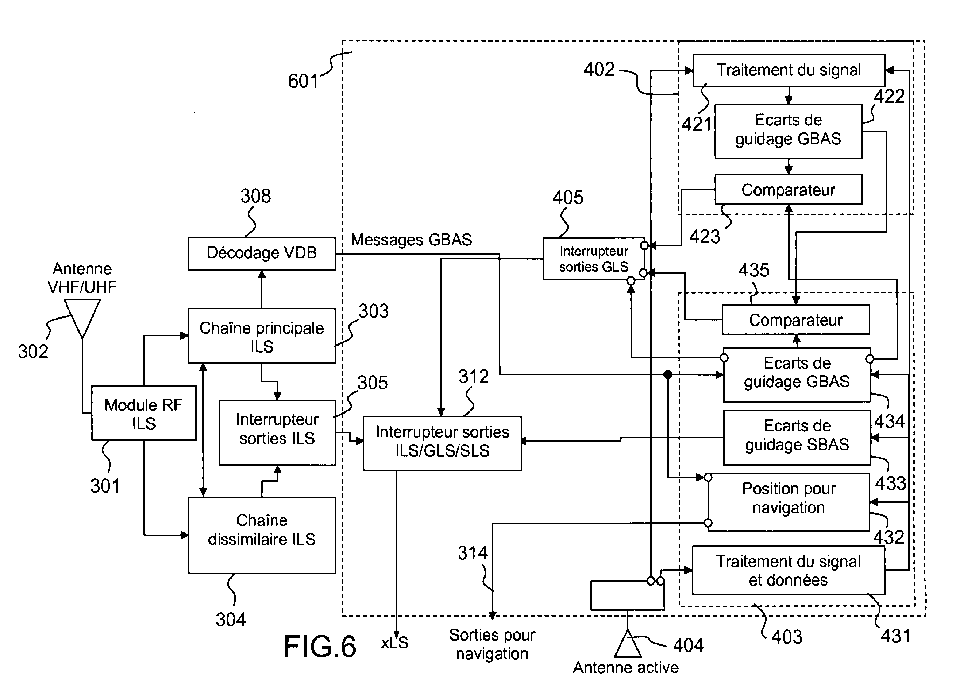

Dans d'autres variantes de réalisation de l'invention, décrites aux figures 5 et 6, il peut également être intégré dans un système hybride GNSS-référence inertielle de type GIRS ou fonctionner en tant que récepteur GNSS autonome.

La figure 5 schématise l'architecture d'un système conjoint MMR et GIRS. Les éléments communs déjà décrits aux figures 3 et 4 sont numérotés avec les mêmes références.

Le récepteur GNSS maitre 403 implémente deux fonctions en parallèle. D'une part, une fonction de navigation GNSS 433 dont les sorties peuvent être hybridées avec des systèmes inertiels (IRS) pour augmenter les performances de disponibilité, d'intégrité et de continuité de la navigation et d'autre part une fonction d'approche GNSS 434 dont les sorties sont sélectionnées ou non par un interrupteur 312 en fonction du type d'approche demandé par l'utilisateur, à savoir ILS, MLS ou GLS.

Pour une application de type MMR telle que décrite à l'appui de la figure 4, l'intégration de la double chaîne GNSS, selon l'invention, dans le dispositif MMR permet d'optimiser la mise en oeuvre de la fonction d'approche GNSS, celle-ci étant placée à proximité des fonctions d'approche ILS/MLS et du calculateur 312 de sélection des sorties. Cependant, elle n'optimise pas la mise en oeuvre de la fonction de navigation du fait de l'absence de proximité avec un système inertiel IRS externe.

L'architecture décrite à la figure 5 est adaptée pour approcher la fonction GNSS de navigation 434 d'un système inertiel IRS 504. L'ensemble formé du module GNSS maitre 403, du système inertiel IRS 504 ainsi que d'un calculateur 503 d'hybridation des données de navigation constitue un équipement 502 appelé GIRS (GNSS-Inertial Reference System). L'intérêt de cette architecture est d'optimiser l'intégrité, la continuité et la disponibilité de la solution de navigation du fait du rapprochement de la fonction GNSS avec la fonction inertielle. L'utilisation conjointe d'un équipement 502 GIRS et d'un équipement 501 MMR permet d'assurer la dissimilarité des traitements GNSS nécessaires aux opérations d'approche en catégorie III. Cela permet d'optimiser la fonction d'approche GNSS en la plaçant à proximité de l'équipement MMR et la fonction de navigation en la plaçant à proximité du système inertiel 504. Cette architecture constitue une variante de mise en oeuvre de l'invention.

La figure 6 schématise une autre variante de mise en oeuvre de l'invention pour laquelle le récepteur GNSS 601 selon l'invention est conçu pour un fonctionnement autonome. Dans ce cas les équipements relatifs au système ILS sont externes au récepteur GNSS 601 lui-même. Une différence avec la mise en oeuvre dans un équipement MMR est que l'interrupteur 312 est interne au récepteur GNSS 601 alors qu'il est externe dans le cas d'une implémentation dans un système multi-mode MMR.

*Mise en oeuvre de la fonction de comparaison des données GLS de chaque module GNSS.*

On décrit à présent plus en détail la mise en oeuvre du comparateur 423,435 des données produites par chaque module GNSS 402,403. L'objectif de cette comparaison est à la fois de limiter le taux de pannes non détectées lorsque celles ci impactent l'un ou l'autre des modules mais également lorsque les deux modules sont simultanément impactés par une erreur dont la source est commune.

Les données produites par chaque module GNSS dont l'intégrité doit être surveillée sont notamment, mais pas exclusivement, les données suivantes : la position horizontale différentielle GBAS, le cap de la piste d'atterrissage sélectionnée, la déviation latérale linéarisée, la déviation verticale linéarisée, la distance verticale au LTP/FTP, la déviation latérale, la déviation verticale, la distance au seuil de piste et les paramètres d'approche tel que l'angle d'approche, la piste d'atterrissage sélectionnée, ou le service GBAS d'approche actif.

Par la suite, on désignera par données de guidage, l'ensemble des données fournies par chaque module GNSS, dont notamment les données listées ci-dessus, et dont l'intégrité doit être surveillée.

Lorsque les deux chaines de traitement GNSS utilisent les mêmes signaux GNSS et donc les mêmes mesures satellite, les erreurs liées à des défauts communs aux deux chaines s'annulent lorsqu'on calcule la différence entre les données de guidage produites par les deux chaines.

Cependant, chacun des deux modules GNSS possède sa propre horloge ou base de temps locale et les calculs réalisés le sont à des instants indépendants. Ainsi, lorsqu'on calcule la différence entre les données de guidage produites par chaque chaine, une erreur résiduelle apparait due à l'asynchronisme des mesures réalisées par chaque module.

Par exemple, dans le cas où la donnée de guidage est une position horizontale, la différence ΔPOS entre les deux positions horizontales calculées subit un écart lié à cet asynchronisme et à la dynamique de l'avion qui peut être quantifiée par la relation suivante :

$$Erreur(\Delta POS) = V.\Delta T + \frac{1}{2}a.\Delta T^2 + \frac{1}{6}j.\Delta T^3 + \varepsilon$$

V est la vitesse horizontale de l'avion, a est l'accélération horizontale de l'avion, j est la sur-accélération horizontale de l'avion, ε est la dynamique résiduelle de plus haut degré, considérée comme négligeable et ΔT est l'écart temporel introduit par l'asynchronisme des calculs entre les deux modules GNSS.

En pratique, le décalage ΔT est de l'ordre de 100 ms ce qui peut entrainer un écart entre les deux positions mesurées qui peut atteindre 41,2m en navigation et 12,8 m en approche.

On présente à présent deux méthodes permettant de compenser l'erreur résiduelle Erreur(ΔPOS).

Une première méthode consiste à utiliser la vitesse horizontale calculée afin de compenser l'écart de temps entre les deux positions horizontales calculées.

Pour cela, si le premier module GNSS fournit un jeu de données de navigation $P_aV_aT_a$ et le second module GNSS fournit un jeu de données de navigation $P_bV_bT_b$, où $P_a$, $P_b$ désigne une mesure de position, $V_a$, $V_b$ une mesure de vitesse et $T_a$, $T_b$ une mesure de temps, la différence ΔPOS doit être calculée comme suit :

$$\Delta POS = P_b - P_a - V_a.(T_b - T_a)$$

C'est-à-dire que la différence entre les deux positions est compensée par le terme $V_a(T_b-T_a)$ qui comporte l'information nécessaire pour compenser le décalage temporel entre les mesures réalisées par chaque chaîne.

Une deuxième méthode consiste à s'assurer que les données de guidage PVT calculées par chaque chaine, sont synchrones d'une composante caractéristique du signal GNSS reçu. Par exemple, pour le cas d'un signal GPS, le motif communément désigné par l'acronyme 1 PPS, présent dans le signal peut être utilisé pour synchroniser les données de guidage, avec un écart maximum prédéfini, par exemple égal à 500 μs. De cette façon, l'écart de temps entre les deux chaines est garanti à plus ou moins 1 ms ce qui induit un écart maximum entre les deux positions, dû à la dynamique de l'avion, de l'ordre de 4cm, négligeable par rapport à la variance attendue sur l'écart des positions ΔPOS.

Un avantage de cette deuxième méthode est qu'elle ne fait plus intervenir la vitesse $V_a$ calculée par le premier module GNSS et dont l'intégrité n'est pas forcément garantie.

La compensation de l'erreur sur la différence ΔPOS entre deux positions horizontales permet de corriger l'asynchronisme entre les deux modules GNSS pour toutes les données de guidage considérées car elles dépendent toutes de la position horizontale ou verticale de l'avion.

On décrit à présent plus en détail la mise en oeuvre de la fonction de comparaison croisée des données de navigation. On suppose que l'une ou l'autre des méthodes décrites ci-dessus à préalablement été utilisée pour compenser l'asynchronisme des calculs entre les deux modules GNSS.

Dans un premier temps on décrit la mise en oeuvre de la fonction de comparaison appliquée à la donnée de guidage particulière qu'est la position horizontale.

La fonction de comparaison consiste dans ce cas à comparer la norme de la différence les deux positions horizontales calculées à un critère égal au produit d'un seuil de détection prédéterminé $K_{pos}$ et de la racine carrée de la variance de cette même différence. La relation (1) illustre ce critère :

$$\left\| \Delta POS_{Horizontale} \right\| > K_{POS}.\sqrt{Variance(\Delta POS_{Horizontale})} \quad (1)$$

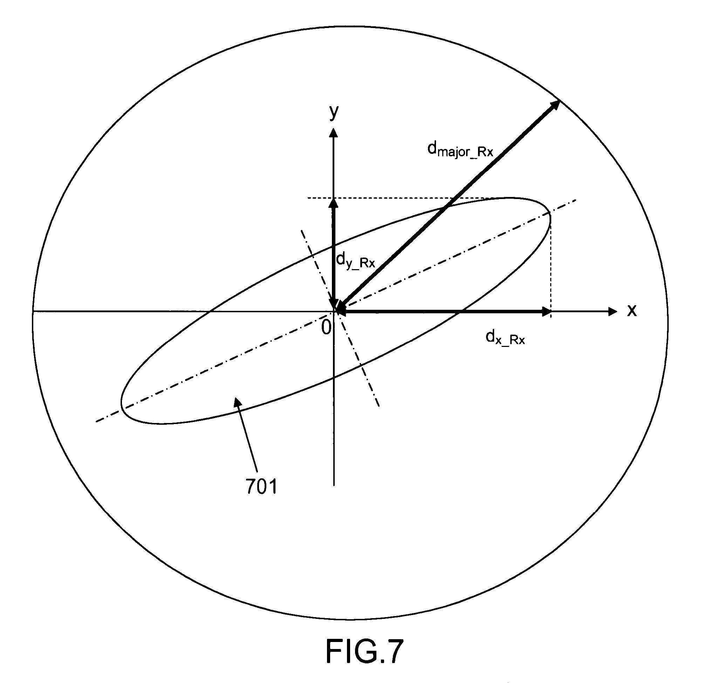

Avantageusement, la variance de la différence des positions horizontales peut être calculée à l'aide des relations suivantes illustrées par la figure 7.

$$Variance(\Delta POS_{Horizontale}) = d^2_{major\_R1} + d^2_{major\_R2}$$

$$d_{major\_Rx} = \sqrt{\frac{d^2_{x\_Rx} + d^2_{y\_Rx}}{2} + \sqrt{\left(\frac{d^2_{x\_Rx} - d^2_{y\_Rx}}{2}\right)^2 + d^2_{xy\_Rx}}}$$

$$d^2_{x\_Rx} = \sum_{i=1}^{N} s^2_{1,i}\sigma^2_{Rx,i} \quad ; \quad d^2_{y\_Rx} = \sum_{i=1}^{N} s^2_{2,i}\sigma^2_{Rx,i} \quad ; \quad d_{xy\_Rx} = \sum_{i=1}^{N} s_{1,i}s_{2,i}\sigma^2_{Rx,i}$$

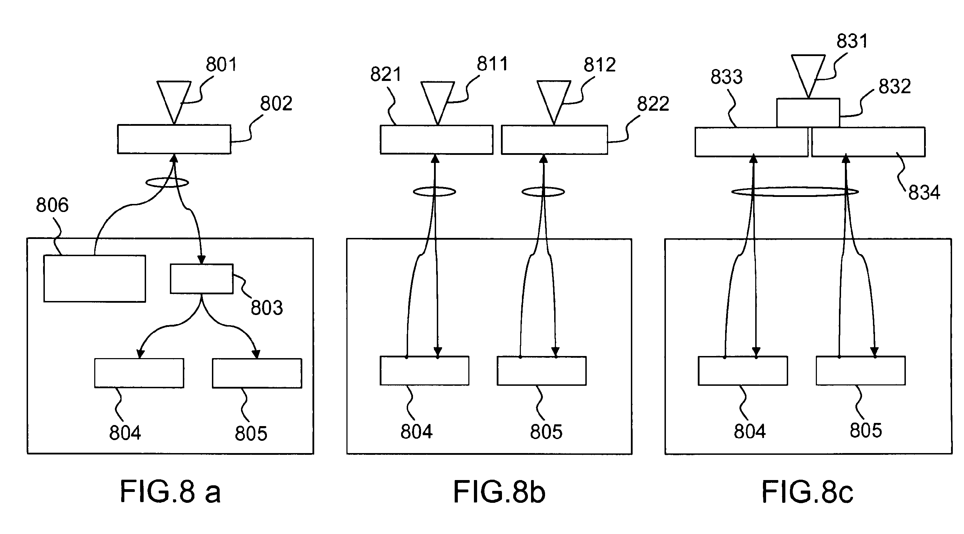

$d_{major-Rx}$, pour x=1 ou 2, est un majorant de l'écart-type estimé de la position horizontale du module GNSS maître (Rx=R1) ou du module GNSS esclave (Rx=R2) calculée en considérant la configuration pire cas de l'ellipse d'erreur 701, telle que représentée à la figure 8, exprimée en mètres.

$d_{x\_Rx}$, est un majorant de l'écart-type estimé de la projection sur l'axe Ox du repère (Oxyz) de la distribution des positions calculées par le récepteur maître (Rx=R1) ou esclave (Rx=R2), en mètres.

$d_{y\_Rx}$ est un majorant de l'écart-type estimé de la projection sur l'axe Oy du repère (Oxyz) de la distribution des positions calculées par le récepteur maître (Rx=R1) ou esclave (Rx=R2), en mètres.

$d_{xy\_Rx}$ est un majorant de la covariance estimée entre les projections des axes Ox et Oy du repère (Oxyz) de la distribution des positions calculées par le récepteur maître (Rx=R1) ou esclave (Rx=R2), en mètres carrés.

Les variables $S_{1,j}$ et $S_{2,j}$ sont des composantes de la matrice de projection pondérée utilisée pour le calcul de position.

La variable $\sigma_{Rx,i}$, exprimée en mètres, correspond à un majorant de l'écart-type de l'erreur résiduelle sur la distance entre le i-ième satellite visible et l'antenne de réception GNSS utilisée pour le calcul de position, effectué par chaque module GNSS, référencé par l'indice x, pour x variant de 1 à 2. Cette erreur résiduelle ne résulte que de sources d'erreurs impactant le fonctionnement du module GNSS lui-même et non de sources d'erreurs impactant le signal GNSS transmis par le satellite tel que des erreurs liées à la propagation du signal. Ainsi, la détection de panne entre les deux chaines est affinée, sans augmenter le taux de fausse alarme car les sources d'erreurs impactant le signal GNSS sont vues de façon identique par les deux chaînes et s'annulent lors du calcul de la différence des positions fournies par chaque chaine. Le fait de ne pas inclure ces sources d'erreur lors de la surveillance de la différence des positions n'augmente pas le taux de fausse alarme.

Une estimée de l'écart-type $\sigma_{Rx,i}$ est fournie par les modules 421,431 respectifs de traitement de signal de chaque module GNSS.

L'erreur résiduelle mesurée par le biais de cette variance est notamment liée à trois sources tel que cela est illustré par la relation suivante :

$$\sigma_{Rx,i}^2 = \sigma_{divg,i}^2 + \sigma_{noise,i}^2 + \sigma_{multipath,i}^2$$

$\sigma_{divg,i}^2$ est la variance de l'erreur résiduelle liée à la phase transitoire du lissage code-porteuse au moment de l'initialisation ou de la réinitialisation du filtrage. L'asynchronisme et la décorrélation des bruits des deux modules GNSS peut entraîner un asynchronisme des initialisations/réinitialisations et par conséquent entraîner un écart sur cette erreur entre les deux chaînes.

$\sigma_{noise,i}^2$ est la variance de l'erreur résiduelle liée au bruit thermique et à la bande passante du lissage code-porteuse. La décorrélation des bruits des deux modules GNSS entraîne la décorrélation de cette erreur.

$\sigma_{multipath,i}^2$ est la variance de l'erreur résiduelle liée aux trajets multiples vus par la fonction de corrélation en entrée de la boucle de poursuite de la phase code. La dissimilarité de la fonction de corrélation entre les deux chaînes entraîne une décorrélation de cette erreur.

En particulier les sources d'erreurs suivantes ne sont pas prises en compte dans le calcul de la variance de l'écart des positions :

- l'erreur résiduelle après application des corrections issues des données d'augmentation GBAS. Cette erreur est commune aux deux modules GNSS qui utilisent la même source de réception de données d'augmentation,
- l'erreur résiduelle liée aux effets de propagation des signaux satellite dans la troposphère. Cette erreur est commune aux deux modules GNSS du fait de l'utilisation d'une même antenne ou de deux antennes proches,
- l'erreur résiduelle liée aux effets de propagation des signaux satellite dans l'ionosphère. Cette erreur est commune aux deux modules GNSS du fait de l'utilisation d'une même antenne ou de deux antennes proches.

Ainsi, toutes les sources d'erreur communes aux deux modules sont éliminées du calcul de variance afin d'affiner le critère de comparaison donné par la relation (1) pour que seules les sources d'erreurs décorrélées entre les deux modules soient prises en compte.

En résumé, la fonction de comparaison 423,435 mise en oeuvre dans chaque module GNSS exécute les étapes suivantes :

- calcul de la différence des positions horizontales,
- calcul de la variance de cette différence à partir des écarts-types d'erreur $\sigma_{Rx,i}$ estimés par chaque module de traitement du signal GNSS,
- application du critère de détection d'erreur défini par la relation (1),
- si le critère est positif, on conclue sur la présence d'un défaut d'intégrité et une alerte est déclenchée, dans le cas contraire, on conclue sur la validité des données de navigation calculées.

En pratique, le seuil de détection $K_{pos}$ est prédéterminé de sorte à minimiser la probabilité de fausse alarme et à maximiser la probabilité de détection d'une erreur sur l'une des deux chaines. Pour cela, une possibilité consiste à prendre l'hypothèse que la différence $\Delta POS$ est une variable Gaussienne et de déterminer le seuil $K_{pos}$ à partir de la courbe de Gauss connue. Cette courbe donne classiquement, pour une variable gaussienne X, la valeur du seuil K à choisir pour que le rapport entre la norme de X et la racine carrée de X soit supérieure à un pourcentage donné.

Autrement dit, la détermination du seuil de détection $K_{pos}$ est faite de façon à réaliser un compromis entre une perte de performance de continuité de la fonction de comparaison pour un seuil $K_{pos}$ trop bas pouvant entraîner des fausses alarmes (détection d'une erreur alors qu'il n'y a pas d'erreur) et une perte de performance d'intégrité de la fonction de comparaison pour un seuil trop élevé pouvant entraîner l'absence de détection d'une erreur.

Ainsi, la détermination du seuil $K_{pos}$ doit être issue d'une analyse de sûreté de fonctionnement permettant de répondre aussi bien à la contrainte de continuité (absence de perte de la fonction pendant la phase critique d'approche) qu'à la contrainte d'intégrité des données de sortie.

Pour donner un exemple de calcul de ce seuil, on prend l'hypothèse que le système d'approche de l'avion n'admet qu'une probabilité de perte de continuité égale à $10^{-5}$ sur un temps d'exposition de 1 minute (durée de la phase d'approche/atterrissage) et que la probabilité qu'une erreur non détectée de position horizontale soit supérieure à une valeur donnée VAL, par exemple égale à 10 m doit être inférieure à $10^{-9}$ sur ce même temps d'exposition.

Pour répondre à ces exigences, une première étape consiste à faire une analyse des défaillances matérielles et de leurs conséquences pour déterminer la probabilité d'apparition d'une panne pouvant entraîner le dysfonctionnement de la fonction d'approche en considérant l'ensemble des éléments concernés (antenne VHF, récepteur VDB, antenne GPS, l'une des deux chaînes de réception GPS, alimentation en énergie, ...). Supposons que cette analyse conclut en une probabilité de panne de $5.10^{-6}$/minute. Supposons aussi que cette analyse conclut que seules 10% des pannes identifiées peuvent entraîner une erreur d'intégrité des sorties de l'une des deux chaînes GNSS.

Si on considère qu'il y a discontinuité soit en cas de panne, soit en cas de fausse alarme du mécanisme de surveillance, une exigence de continuité de $10^{-5}$/minute et un taux de panne de $5.10^{-6}$/minute implique que ce taux de fausse alarme doit être inférieur à $5.10^{-6}$/minute (= $10^{-5}$/minute - $5.10^{-6}$/minute).

Si on considère qu'il y a défaut d'intégrité s'il y a une panne et que cette panne entraîne une erreur d'intégrité sur l'une des deux sorties et que cette erreur n'est pas détectée par le mécanisme de surveillance, alors, pour atteindre lune probabilité d'erreur non détectée de $10^{-9}$/minute, il faut un taux de détection d'erreur de position horizontale supérieur à $2.10^{-3}$/minute ( = $10^{-9}$/minute / ($5.10^{-6}$/minute * 10%)).

Les filtrages mis en oeuvre dans les récepteurs GNSS induisent une forte corrélation temporelle des données de sortie pour l'approche: ainsi, statistiquement, un seul tirage indépendant est considéré pour déterminer la probabilité de fausse alarme ou d'erreur non détectée sur la durée totale d'exposition d'une minute.

On fixe le seuil $K_{pos}$ pour tenir la probabilité de fausse alarme de $5.10^{-6}$. Pour une distribution Gaussienne normalisée, cela revient à définir un seuil. $K_{pos}$ supérieur ou égal à 4,6

$$\int_{K_{pos}}^{\infty} \frac{1}{\sqrt{2\pi}} e^{-\frac{x^2}{2}} . dx \leq 5.10^{-6} \iff K_{pos} \geq 4,6$$

De façon plus générale, le seuil de détection $K_{pos}$ doit vérifier la contrainte définie par l'inégalité suivante :

$$\int_{K_{pos}}^{\infty} \frac{1}{\sqrt{2\pi}} e^{-\frac{x^2}{2}} . dx \leq P_{fa} ,$$ avec $P_{fa}$ la probabilité de fausse alarme visée.

Dans le cas d'une erreur $\beta$ sur l'une des deux chaînes impliquant un défaut d'intégrité (ainsi $\beta \geq 10m$), la distribution de l'écart de position horizontale est majorée par une Gaussienne centrée en $\beta$ et d'écart-type $d_{major\_Rx}$.

La probabilité de non-détection est alors donnée par les formules suivantes :

$$P_{nd} = \int_{-\infty}^{K_{pos}\sqrt{d^2_{major\_R1}+d^2_{major\_R2}}} \frac{1}{d_{major\_Rx}\sqrt{2\pi}} e^{-\frac{(x-\beta)^2}{2.d^2_{major\_Rx}}}.dx$$

$$= \int_{-\infty}^{\frac{K_{pos}\sqrt{d^2_{major\_R1}+d^2_{major\_R2}}-\beta}{d_{major\_Rx}}} \frac{1}{\sqrt{2\pi}} e^{-\frac{u^2}{2}}.du$$

$$\leq \int_{-\infty}^{K_{pos}-\frac{\beta}{d_{major\_Rx}}} \frac{1}{\sqrt{2\pi}} e^{-\frac{u^2}{2}}.du$$

$$P_{nd} \leq \int_{-\infty}^{K_{pos}-\frac{\beta}{\max(d_{major\_Rx})}} \frac{1}{\sqrt{2\pi}} e^{-\frac{u^2}{2}}.du$$

Pour tenir un taux de détection d'erreur supérieur à $2.10^{-3}$, il faut fixer le seuil $K_{pos}$ à l'aide de la relation suivante :

$$K_{pos} \leq -3,1 + \frac{10}{\max(d_{major\_Rx})}$$

Du point de vu des performances du système GNSS, on a :

$$\max(d_{major\_Rx}) < HDOP_{max} . \max(\sigma_{Rx,i})$$

$HDOP_{max}$ est défini dans les standards GPS à 1,5 en considérant les satellites d'élévation supérieur à 5° et une constellation nominale de 24 satellite GPS et en considérant 99% des position possibles sur Terre et dans le temps.
En considérant des satellites au-dessus de 5° d'élévation, les standards GPS définissent :

- $\max(\sigma_{div,i}) = 0,25m$
- $\max(\sigma_{noise,i}) = 0,15m$
- $\max(\sigma_{multipath,i}) = 0,45m$

Ainsi, $\max(\sigma_{Rx,i}) = 0,54m$ et par conséquence $\max(d_{major\_Rx}) < 0,8m.$
Ainsi, pour tenir les exigences de continuité et d'intégrité, il faut prendre une valeur de seuil $K_{pos}$ dans l'intervalle [4,6 ; 9,4]. On prendra par exemple une valeur au milieu de l'intervalle à $K_{pos}=7$.
Une méthode équivalente est réalisée pour vérifier l'intégrité des autres types de données de guidage. En particulier un critère de détection d'erreurs équivalent à celui donné par la relation (1) pour le cas particulier de la position horizontale est proposé.
On décrit à présent l'élaboration de ce critère pour la vérification de l'intégrité des mesures de déviation latérale, rectilinéaire latérale, verticale, rectilinéaire verticale ainsi que la distance au seuil de piste.

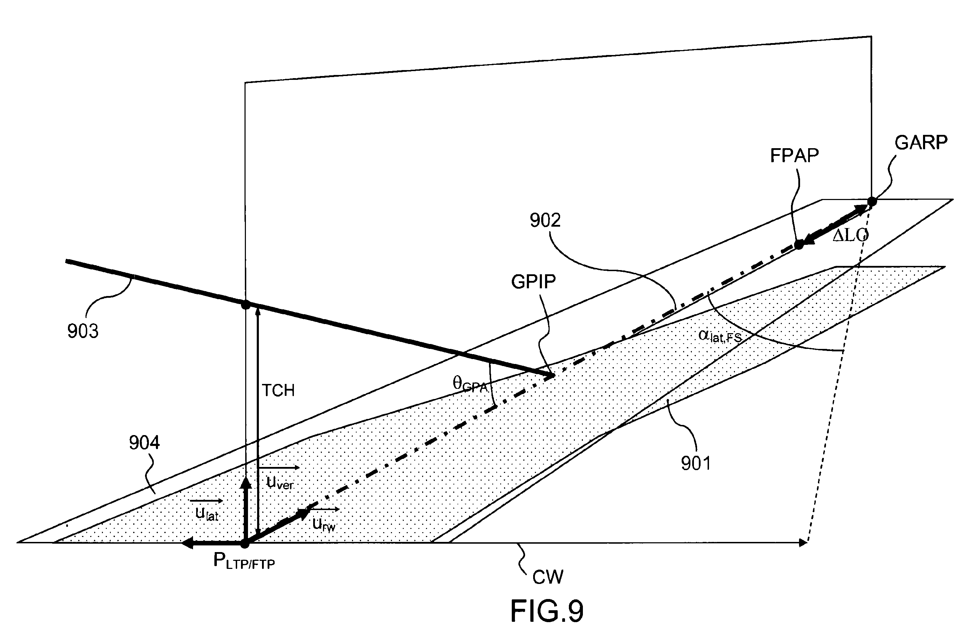

La figure 9 schématise les paramètres qui entrent en jeu lors d'une procédure d'approche en vue d'un atterrissage sur une piste 901 selon un axe d'atterrissage 902. Ces paramètres sont fournis par une station GBAS via la liaison VDB. L'aéronef suit un chemin d'approche 903 définit par l'angle $\theta_{GPA}$ entre la direction formée par ce chemin 903 et le plan de la piste d'atterrissage 901 local au point $P_{LTP/FTP}$ qui correspond au seuil de piste dans un repère fixe par rapport à la Terre, par exemple le repère ECEF (Earth Centered Earth Fixed). La phase finale d'approche est en outre définie à l'aide des paramètres suivants : le point FPAP (Flight Path Alignment Point), le point GARP de fin de piste, la distance $\Delta LO$ entre les points FPAP et GARP, la hauteur TCH du chemin d'approche au dessus du point $P_{LTP/FTP}$, le paramètre CW (Course Width) utilisé pour normaliser la déviation latérale à l'échelle de valeurs utilisée dans un système ILS et le point GPIP d'intersection entre le chemin d'approche 903 et le plan horizontal 904. On définit le repère orthogonal direct $(P_{LTP/FTP}, \overrightarrow{u_{rw}}, \overrightarrow{u_{lat}}, \overrightarrow{u_{vert}})$ à partir du point $P_{LTP/FTP}$. Le vecteur unitaire $\overrightarrow{u_{rw}}$ est colinéaire à l'axe d'atterrissage 902. Le point GPIP est défini dans ce repère par les coordonnées $\left( \dfrac{TCH}{\tan(\theta_{GPA})}, 0, 0 \right)$.

La déviation latérale $\alpha_{lat,Rx}$ est calculée à partir des paramètres d'approche à l'aide de la relation suivante :

$$\alpha_{lat,Rx} = \frac{0.155}{\alpha_{lat,FS}} \tan^{-1}\left(a_{lat,Rx}\right) = \frac{\overrightarrow{u_{lat}} \cdot \overrightarrow{P_{LTP/FTP}P_{Rx}}}{\|\Delta FPAP\| + \Delta OL - \overrightarrow{u_{rw}} \cdot \overrightarrow{P_{LTP/FTP}P_{Rx}}}$$

$$\text{avec } \alpha_{lat,FS} = \pm \tan^{-1}\left( \frac{CW}{\|\Delta FPAP\| + \Delta LO} \right)$$

$P_{Rx}$ est la mesure de position dans le repère terrestre calculée par chaque module GNSS.

La différence entre les déviations latérales calculées par chacun des deux modules GNSS est donnée par la relation suivante :

$$\alpha_{lat,R1} - \alpha_{lat,R2} \approx \frac{0.155}{\alpha_{lat,FS}}\left(a_{lat,R1} - a_{lat,R2}\right) \approx \frac{0.155\left(\overrightarrow{u_{lat}} \cdot \overrightarrow{P_{R2}P_{R1}}\right)}{\alpha_{lat,FS} \cdot \left(\|\Delta FPAP\| + \Delta OL - \overrightarrow{u_{rw}} \cdot \overrightarrow{P_{LTP/FTP}P_{Rx}}\right)}$$

La variance de cette différence est donnée par la relation suivante :

$$Variance\left(\alpha_{lat,R1} - \alpha_{lat,R2}\right) \approx \left( \frac{0.155}{\alpha_{lat,FS} \cdot \left(\|\Delta FPAP\| + \Delta OL - \overrightarrow{u_{rw}} \cdot \overrightarrow{P_{LTP/FTP}P_{Rx}}\right)} \right)^2 \cdot$$
$$Variance\left(\overrightarrow{u_{lat}} \cdot \overrightarrow{P_{R2}P_{R1}}\right)$$

Avec

$$Variance\left(\overrightarrow{u_{lat}} \cdot \overrightarrow{P_{R2}P_{R1}}\right) = d_{lat,R1}^2 + d_{lat,R2}^2 \quad ,$$

$d_{lat,Rx}^2$ est un majorant de la variance estimée de la projection sur l'axe ulat de la distribution des positions calculées par le module maître (Rx=R1) ou esclave (Rx=R2), en mètres carrés. $d_{lat,Rx}^2 = \sin^2\theta \cdot \sum_{i=1}^{N}\left(s_{1,i}^2 \cdot \sigma_{Rx,i}^2\right) + \cos^2\theta \cdot \sum_{i=1}^{N}\left(s_{2,i}^2 \cdot \sigma_{Rx,i}^2\right)$ et $\theta$ l'angle de cap de la piste par rapport au Nord, calculé à partir des paramètres transmis par le système GBAS.

Pour tester l'intégrité des mesures de déviation latérale réalisées par chaque module GNSS, on définit, selon des critères similaires à ceux retenus pour le cas de la position horizontale, un seuil de détection $K_{lat}$ de façon à minimiser la probabilité de fausse alarme et à maximiser la probabilité de détection d'une erreur de calcul de la déviation latérale sur l'une des deux chaînes. Une alerte de défaut d'intégrité sur la déviation latérale est ainsi déclenchée si le critère suivant est respecté :

$$\left|\alpha_{lat,R1} - \alpha_{lat,R2}\right| > K_{lat} \cdot \frac{0.155}{\alpha_{lat,FS} \cdot \left(\left\|\overrightarrow{\Delta FPAP}\right\| + \Delta OL - \overrightarrow{u_{rw}} \cdot \overrightarrow{P_{LTP/FTP}P_{Rx}}\right)} \sqrt{d_{lat,R1}^2 + d_{lat,R2}^2}$$

qui peut s'exprimer plus simplement par :

$$\left|\alpha_{lat,R1} - \alpha_{lat,R2}\right| > K_{lat} \cdot \sqrt{Variance(\alpha_{lat,R1} - \alpha_{lat,R2})} \quad (2)$$

A partir des paramètres d'approche il est également possible de calculer la déviation rectilinéaire latérale comme suit :

$$\alpha_{rectlat,Rx} = \overrightarrow{u_{lat}} \cdot \overrightarrow{P_{LTP/FTP}P_{Rx}}$$

De façon similaire, pour tester l'intégrité des mesures de déviation rectilinéraire latérale, on définit un seuil de détection $K_{rectlat}$ de façon à minimiser la probabilité de fausse alarme et à maximiser la probabilité de détection d'une erreur sur l'une des deux chaînes et on déclenche une alerte de défaut d'intégrité sur la déviation rectilinéaire latérale si le critère suivant est respecté :

$$\left|\alpha_{rectlat,R1} - \alpha_{rectlat,R2}\right| > K_{rectlat} \cdot \sqrt{Variance(\alpha_{rectlat,R1} - \alpha_{rectlat,R2})} \quad (3)$$

Qui peut également s'écrire sous la forme :

$$\left|\alpha_{rectlat,R1} - \alpha_{rectlat,R2}\right| > K_{rectlat} \cdot \sqrt{d_{lat,R1}^2 + d_{lat,R2}^2}$$

Les critères de test d'intégrité des données de guidage qui concernent la déviation verticale, la déviation rectilinéaire verticale et la distance au seuil de piste sont établis de façon analogues à l'aide des relations (4), (5) et (6).

$$\left|\alpha_{vert,R1} - \alpha_{vert,R2}\right| > K_{vert} \cdot \sqrt{Variance(\alpha_{vert,R1} - \alpha_{vert,R2})}$$

$$(4), \left|\alpha_{rectvert,R1} - \alpha_{rectvert,R2}\right| > K_{rectvert} \cdot \sqrt{Variance(\alpha_{rectvert,R1} - \alpha_{rectvert,R2})} \quad (5)$$

$$\left|d_{seuil\_piste,R1} - d_{seuil\_piste,R2}\right| > K_{seuil\_piste} \cdot \sqrt{Variance(d_{seuil\_piste,R1} - d_{seuil\_piste,R2})} \quad (6)$$

La relation (4) s'écrit également sous la forme :

EP 2 648 017 B1

$$\left| \alpha_{vert,R1} - \alpha_{vert,R2} \right| > K_{vert} \cdot \frac{0.7}{\theta_{GPA} \cdot \left\| \overrightarrow{u_{vert}} \wedge \left( \overrightarrow{P_{GPIP}P_{Rx}} \wedge \overrightarrow{u_{vert}} \right) \right\|} \sqrt{d_{vert,R1}^2 + d_{vert,R2}^2}$$

Avec :

$$\alpha_{vert,Rx} = \frac{0.7}{\theta_{GPA}} \left( \tan^{-1} \left( a_{vert,Rx} \right) - \theta_{GPA} \right)$$

$$a_{vert,Rx} = \frac{\overrightarrow{u_{vert}} \cdot \overrightarrow{P_{GPIP}P_{Rx}}}{\left\| \overrightarrow{u_{vert}} \wedge \left( \overrightarrow{P_{GPIP}P_{Rx}} \wedge \overrightarrow{u_{vert}} \right) \right\|}$$

$$a_{vert,Rx} \ll 1 \text{ et } \left\| \overrightarrow{u_{vert}} \wedge \left( \overrightarrow{P_{R1}P_{R2}} \wedge \overrightarrow{u_{vert}} \right) \right\| \ll \left\| \overrightarrow{u_{vert}} \wedge \left( \overrightarrow{P_{GPIP}P_{Rx}} \wedge \overrightarrow{u_{vert}} \right) \right\|,$$

$$\alpha_{vert,R1} - \alpha_{vert,R2} \approx \frac{0.7}{\theta_{GPA}} \left( a_{vert,R1} - a_{vert,R2} \right) \approx \frac{0.7 \left( \overrightarrow{u_{vert}} \cdot \overrightarrow{P_{R2}P_{R1}} \right)}{\theta_{GPA} \cdot \left\| \overrightarrow{u_{vert}} \wedge \left( \overrightarrow{P_{GPIP}P_{Rx}} \wedge \overrightarrow{u_{vert}} \right) \right\|}$$

$$d_{vert,Rx}^2 = \sum_{i=1}^{N} s_{3,i}^2 \sigma_{Rx,i}^2$$

La relation (5) s'écrit également sous la forme :

$$\left| \alpha_{rectvert,R1} - \alpha_{rectvert,R2} \right| > K_{rectvert} \cdot \sqrt{d_{vert,R1}^2 + d_{vert,R2}^2}$$

avec $\alpha_{rectvert,Rx} = \overrightarrow{u_{vert}} \cdot \overrightarrow{P_{LTP/FTP}P_{Rx}}$

La relation (6) s'écrit également sous la forme :

$$\left| d_{Th\_hor,R1} - d_{Th\_hor,R1} \right| > K_{Th\_hor} \cdot \sqrt{d_{vert,R1}^2 + d_{vert,R2}^2}$$

avec $d_{Th\_hor,Rx} = \left\| \overrightarrow{u_{vert}} \wedge (\overrightarrow{P_{LTP/FTP}P_{Rx}} \wedge \overrightarrow{u_{vert}}) \right\|$

Concernant le cap $\theta$ de la piste d'atterrissage sélectionnée, une différence entre les mesures de cap calculées par les deux chaines doit entrainer une alerte d'intégrité sans tolérance sur l'écart entre les deux mesures car les deux chaines doivent utiliser les mêmes données GBAS.

De façon générale, un critère de test d'intégrité d'une donnée de guidage $X_g$, dont deux mesures $X_{g1}$, $X_{g2}$ sont fournies respectivement par le premier module GNSS maitre et le second module GNSS esclave, du dispositif double-chaine selon l'invention, est établi à l'aide de la relation générale (7) :

16

$$\left| X_{g1} - X_{g2} \right| > K_g \sqrt{Variance(X_{g1} - X_{g2})} \quad (7)$$

Kg est un seuil de détection prédéterminé de sorte à minimiser la probabilité de fausse alarme $P_{fa}$, c'est-à-dire la probabilité qu'une alarme d'intégrité soit déclenchée alors que les mesures $X_{g1},X_{g2}$ sont valides, tout en maximisant la probabilité de détection d'une erreur réelle impactant l'une ou l'autre, ou les deux mesures $X_{g1}$ ,$X_{g2}$ simultanément.

Dans un mode particulier de réalisation de l'invention, tel que développé ci-dessus pour le cas particulier de la mesure de position horizontale, le seuil de détection Kg est déterminé à partir des deux relations suivantes :

$$\int_{K_g}^{\infty} \frac{1}{\sqrt{2\pi}} e^{-\frac{x^2}{2}} .dx \le P_{fa}$$

et

$$P_{nd} \le \int_{-\infty}^{K_g \frac{VAL}{\sqrt{\max(Variance(X_{g1}),Variance(X_{g2}))-Covariance(X_{g1},X_{g2})}}} \frac{1}{\sqrt{2\pi}} e^{-\frac{u^2}{2}} .du ,$$

avec $P_{nd}$ la probabilité de non détection d'une erreur et VAL la valeur limite d'erreur sur l'une des mesures $X_{g1}$ ,$X_{g2}$ au-delà de laquelle on considère qu'un défaut d'intégrité existe sur les données de sortie $X_{g1}$ ,$X_{g2}$ de l'un des deux modules.

Autrement dit, la valeur VAL est la valeur limite tolérable d'erreur sur l'une des mesures $X_{g1}$ ,$X_{g2}$ en dessous de laquelle l'intégrité desdites mesures est supposée garantie.

Le critère de test d'intégrité (7) permet notamment d'améliorer les performances en probabilité de détection pour des erreurs communes aux deux mesures $X_{g1}$ ,$X_{g2}$.

L'invention consiste à déclencher une alerte d'intégrité si la relation (7) est vérifiée.

La variance de l'écart entre les deux mesures $X_{g1},X_{g2}$ peut être avantageusement déterminée à partir des paramètres de la procédure d'approche et est minimisée en éliminant les erreurs communes aux deux chaînes et en corrigeant l'asynchronisme des deux chaînes.

*Méthodes permettant de rendre dissimilaire l'architecture duale maitre esclave selon l'invention*

Afin d'améliorer le niveau d'intégrité d'un système GLS, un objectif de l'invention est de mettre en oeuvre une comparaison croisée des mesures de guidage fournies par chaque module GNSS pour éliminer les mesures erronées lorsque l'erreur n'impacte que l'un ou l'autre des modules. Cependant, même lorsqu'une telle comparaison croisée est réalisée, certaines erreurs, qui impactent de façon commune les deux modules simultanément, ne sont pas détectées. Pour pallier ce problème, une solution consiste à introduire de la dissimilarité entre les deux chaines de traitement GNSS afin de limiter au maximum l'apparition d'erreurs liées à des sources communes aux deux chaines.

On décrit à présent plusieurs méthodes permettant de rendre l'architecture duale selon l'invention dissimilaire.

Les éléments suivants peuvent être impactés par un défaut qui peut entraîner un défaut d'intégrité sur les mesures de guidage fournies en sortie d'un récepteur GNSS :

- la chaîne de filtrage constituée de filtres à la fréquence de réception du signal GNSS ainsi qu'aux fréquences intermédiaires,
- les moyens de synthèses de fréquence du récepteur GNSS, en particulier l'oscillateur de référence, les composants réalisant la synthèse des oscillateurs locaux et de l'horloge d'échantillonnage à partir de l'oscillateur de référence, le mixer analogique de transposition de la fréquence GNSS en fréquences intermédiaires avant échantillonnage, les moyens d'alimentation des parties analogiques, avec comme effet redouté, la génération de raies parasites affectant différemment la réception des signaux GNSS.

- les moyens d'alimentation du préamplificateur de l'antenne GNSS avec comme effet redouté la génération de raies parasites en amont de la chaîne de réception GNSS,
- les moyens d'alimentation de la partie numérique du récepteur avec comme effet redouté des erreurs d'exécution des traitements nécessaires au calcul et à la sortie des déviations,
- la fonction de génération des signaux locaux, de corrélation et de poursuite des signaux reçus des satellites GNSS avec comme effet redouté des biais non détectés sur la détermination des pseudo-distances et par conséquent potentiellement sur les déviations calculées,
- les algorithmes logiciels tels que demandés par les normes relatives aux standards GNSS tels que les algorithmes de validation des éphémérides et données d'horloge GNSS ; détermination, filtrage, correction et validation des pseudo-distances entre les satellites reçus et le récepteur ; calcul, validation et estimation de la précision des mesures de position, vitesse et temps PVT ; calcul et sortie des déviations.

Parmi les défauts cités ci-dessus, un sous-ensemble peut entraîner un défaut simultané sur les deux chaînes GNSS et ainsi peut ne pas être détecté par la surveillance mutuelle des chaînes entre elles. Il s'agit notamment des défauts suivants :

- défaut de conception matérielle menant à une même sensibilité à un environnement mécanique ou thermique spécifique : ceci concerne principalement les composants analogiques et en particulier les filtres et les composants de synthèse de fréquence,
- défaut de conception matérielle déclenchée par un défaut de l'alimentation électrique commune aux deux chaînes,
- défaut de conception logicielle lié à une configuration de constellation GNSS et à des caractéristiques de signal GNSS émis spécifiques,
- défaut de conception révélé par un environnement particulier d'interférence et de trajets multiples du signal GNSS, par exemple lié à des réflexions du signal GNSS aux obstacles environnant l'antenne,
- défaut de conception logicielle lié à une configuration particulière de données émises par la station sol GBAS (données d'identification, d'authentification, de corrections, de description du chemin d'approche...),
- défaut de conception logicielle lié à un cas particulier sur la position de l'avion et le temps courant.

Pour traiter les sources de panne commune notamment listées ci-dessus, il est nécessaire de s'assurer d'une dissimilarité de réponse des deux chaînes de façon à les rendre détectables par le mécanisme de surveillance mutuelle entre les chaînes.

Une première méthode consiste à concevoir deux chaînes de façon différente du point de vue matériel et/ou logiciel.

Concernant le matériel, la dissimilarité peut être obtenue par l'utilisation de composants différents, en particulier en ce qui concerne les composants qui sont source d'erreur d'intégrité. Les composants qui doivent préférentiellement être conçus différemment entre les deux chaines sont les composants mettant en oeuvre l'alimentation des parties analogique, les oscillateurs de référence, les synthétiseurs de fréquence, les mélangeurs, les filtres analogiques et les processeurs de traitement numérique du signal.

Concernant le logiciel, la dissimilarité peut être obtenue par l'utilisation d'équipes de développement indépendantes, de langages de programmation différents ou bien d'outils et d'option de compilation différents, de méthodes de topographie (mapping) mémoire différents notamment pour la mémoire de programmation, la mémoire de données ou la mémoire non volatile de données.

Un autre élément du récepteur GNSS double-chaine selon l'invention qui peut être source commune de défaut d'intégrité est l'antenne de réception des signaux GNSS et en particulier l'alimentation du préamplificateur de l'antenne.

Les figures 8a,8b et 8c schématisent trois architectures possibles utilisant une ou deux antennes pour adresser les deux modules GNSS du récepteur selon l'invention.

La figure 8a concerne une architecture mono-antenne 801 qui utilise un diviseur 803 pour diviser la puissance reçue à travers le préamplificateur 802 de l'antenne 801 afin d'alimenter chaque module GNSS 804,805 d'un récepteur double chaine selon l'invention. Une seule source d'alimentation 806 est nécessaire pour l'antenne 801.

Dans l'architecture de la figure 8a, le préamplificateur 802 de l'antenne 801 est source commune de défaut d'intégrité pour les deux modules GNSS 804,805.

Afin d'introduire de la dissimilarité en amont de la chaine de traitement du signal de radio-navigation, l'architecture de la figure 8b est proposée, dans laquelle deux antennes distinctes 811,812 sont chacune reliée à un des modules GNSS 804,805 par l'intermédiaire de deux préamplificateurs 821,822 distincts également qui n'introduisent donc pas d'erreurs communes.

Dans l'architecture de la figure 8b, les deux antennes étant distinctes, le mécanisme de surveillance croisée doit prendre en compte la différence entre les sorties des deux antennes due à leurs positions différentes. Pour cela, deux méthodes peuvent être mises en oeuvre. Une première méthode consiste à ajouter au critère de surveillance, donné par la relation (7), un biais b maximum calculé à partir de la connaissance a priori de la distance entre les deux antennes. L'avantage de cette méthode est qu'elle n'utilise que l'information de distance absolue entre les deux antennes. La relation (7) devient :

$$\left| X_{g1} - X_{g2} \right| > K_g \cdot \sqrt{Variance(X_{g1} - X_{g2})} + b \quad (8)$$

b peut être avantageusement déterminée à partir des paramètres de la procédure d'approche.

Pour la surveillance de la position horizontale, de la distance au seuil de piste, ainsi que des déviations rectilinéaires verticales et horizontales, le biais b peut être pris égal à la distance absolue entre les deux antennes, notée par la suite $d_{ant}$.

Pour la surveillance des déviations latérales, le biais b peut être calculé à l'aide de la relation suivante:

$$b = \frac{0.155}{\alpha_{lat,FS} \cdot \left( \|\overrightarrow{\Delta FPAP}\| + \Delta OL - \overrightarrow{u_{rw}} \cdot \overrightarrow{P_{LTP/FTP} P_{Rx}} \right)} d_{ant}$$

Pour la surveillance des déviations verticales, le biais b peut être calculé à l'aide de la relation suivante:

$$b = \frac{0.7}{\theta_{GPA} \cdot \left\| \overrightarrow{u_{vert}} \wedge \left( \overrightarrow{P_{GPIP} P_{Rx}} \wedge \overrightarrow{u_{vert}} \right) \right\|} d_{ant}$$

Une deuxième méthode applicable à l'architecture de la figure 8b, consiste à translater la position estimée vers une référence commune de l'aéronef. Les positions relatives des deux antennes et de la référence commune sont connues des récepteurs dans le repère de l'aéronef et peuvent être projetées dans le repère GNSS en utilisant les données d'attitude de l'aéronef fournis aux récepteurs par un système inertiel à bord. Les deux récepteurs peuvent alors se servir du vecteur reliant leur antenne à la référence commune pour corriger les données de guidage avant de comparer leur différence à K fois l'estimée de leur écart-type. L'avantage de cette méthode, par rapport à la première, est qu'elle permet de ne pas relâcher les critères de surveillance et de conserver la probabilité de détecter une erreur sur l'une des deux chaînes.

Une alternative à cette architecture double antenne est représentée à la figure 8c. Elle consiste à utiliser une seule antenne 831 en sortie de laquelle est positionné un diviseur 832 qui sépare le signal reçu et le dirige respectivement vers deux préamplificateurs 833,834. L'avantage de cette architecture est qu'elle permet de minimiser les sources d'erreur communes entre les deux chaines tout en évitant l'introduction de difficultés complémentaires dans les mécanismes de surveillance du fait de l'utilisation d'une même antenne passive et par conséquent d'une même référence de position calculée par les deux chaînes de réception GNSS.

L'utilisation de moyens matériels et/ou logiciels différents pour chaque module GNSS constitue une première méthode d'introduction de dissimilarité dans le récepteur double-chaine selon l'invention.

Une deuxième méthode permet d'utiliser les mêmes composants matériels entre les deux chaînes. Elle consiste à configurer le fonctionnement de chacune des chaînes de façon différente pour s'assurer que le mécanisme de surveillance entre les chaînes détecte un défaut commun sur l'un des composants matériels identifiés comme source potentielle d'erreur d'intégrité.

Les configurations suivantes sur chaque chaine de traitement GNSS peuvent être réalisées pour introduire de la dissimilarité. Le filtre numérique de réception de chaque module GNSS peut être configuré différemment. Par exemple, la bande passante du filtre du module maitre peut être configurée pour une réception large bande tandis que la bande passante du filtre du module esclave peut être configurée pour une réception bande étroite.

Dans chaque module GNSS, la méthode de corrélation du signal GNSS avec la réplique locale peut être différente. Par exemple, un corrélateur avance-retard étroit ou double-delta étroit peut être utilisé pour le module GNSS maitre alors qu'un corrélateur avance-retard plus large est utilisé pour le module GNSS esclave.

Enfin, deux plans de fréquence différents entre les deux modules de réception GNSS peuvent être utilisés par configuration des synthèses de fréquence des oscillateurs locaux et de la fréquence d'échantillonnage. Par construction, le fait d'utiliser deux plans de fréquence différents permet de garantir que les raies parasites générées par les composants analogiques de changement de fréquence et d'échantillonnage sont présentes à des fréquences, phases et amplitudes différentes, pour chaque module, au niveau de la fonction de corrélation du signal reçu parasité avec le signal local.

Etant donné que l'effet d'une raie parasite dépend de sa phase et de sa fréquence relative au signal GNSS utile à recevoir, la perturbation de la poursuite de ce signal et des pseudo-distances estimées est différente entre les deux chaînes. Ainsi, une comparaison entre les deux chaînes permet de détecter une telle incohérence et d'éviter de sortir des déviations potentiellement erronées.

L'invention permet d'établir un critère de surveillance de la similitude des résultats de sortie des deux chaînes GNSS du récepteur double chaine. Le critère de surveillance est déterminé de sorte à minimiser le taux de fausse alarmes, qui entraîne un problème de disponibilité de la fonction d'approche, et à maximiser le taux de détection des erreurs d'intégrité qui rendent inefficace le mécanisme de double chaînes. Aussi, l'un des objectifs de l'invention est de réduire le plus possible le critère de comparaison sans impacter le taux de fausses alarmes. Le fait d'éliminer les sources d'erreurs communes entre les deux chaînes dans la détermination du seuil de détection et le fait de corriger l'asynchronisme entre les deux chaînes permet de réduire le seuil de détection sans augmenter le taux de fausses alarmes.

## Revendications

1. Dispositif de réception de signaux de radio-navigation (401,601), pour l'aide au pilotage d'un aéronef, **caractérisé en ce qu'**il comprend un premier module GNSS maitre (403) et un second module GNSS esclave (402) dissimilaires, le premier module GNSS maitre (403) comprenant un premier moyen de traitement des signaux de radio-navigation (431) et un premier moyen de calcul (434) de données de guidage ($X_g$) à partir des mesures fournies par ledit premier moyen de traitement des signaux (431), le second module GNSS esclave (402) comprenant un second moyen de traitement des signaux de radio-navigation (421) et un second moyen de calcul (422) de données de guidage ($X_g$) à partir des mesures fournies par ledit second moyen (421) de traitement des signaux, chaque module GNSS (403,402) comprenant en outre un moyen de comparaison (435,423) entre les sorties $X_{g1}$, $X_{g2}$ desdits premier et second moyen de calcul de données de guidage (434,422) adapté à exécuter le test d'intégrité suivant :

$$\left| X_{g1} - X_{g2} \right| > K_g \sqrt{Variance(X_{g1} - X_{g2})}$$

et à conclure à un défaut d'intégrité si ledit test d'intégrité est vérifié,
Kg étant un seuil de détection prédéterminé de sorte à obtenir une probabilité donnée $P_{nd}$ de détection d'une erreur impactant l'une ou l'autre, ou les deux mesures $X_{g1}$, $X_{g2}$ simultanément et une probabilité de fausse alarme $P_{fa}$ donnée.

2. Dispositif de réception de signaux de radio-navigation (401,601) selon la revendication 1 dans lequel le seuil de détection $K_g$ est déterminé à partir des deux inégalités suivantes :

$$\int_{K_g}^{\infty} \frac{1}{\sqrt{2\pi}} e^{-\frac{x^2}{2}} .dx \leq P_{fa}$$

et

$$P_{nd} \leq \int_{-\infty}^{K_g \frac{VAL}{\sqrt{\max\left(Variance\left(X_{g1}\right),Variance\left(X_{g2}\right)\right)-Covariance\left(X_{g1},X_{g2}\right)}}} \frac{1}{\sqrt{2\pi}} e^{-\frac{u^2}{2}} .du$$

, avec VAL la valeur limite tolérable d'erreur sur l'une des mesures $X_{g1}$, $X_{g2}$ en dessous de laquelle l'intégrité desdites mesures est garantie.

3. Dispositif de réception de signaux de radio-navigation (401,601) selon l'une des revendications précédentes dans lequel les sources communes d'erreur entre le premier module GNSS maitre (403) et le second module GNSS esclave sont éliminées du calcul de la variance de la différence entre les sorties $X_{g1}$ ,$X_{g2}$ desdits premier et second moyen de calcul de données de guidage (434,422).

4. Dispositif de réception de signaux de radio-navigation (401,601) selon l'une des revendications précédentes dans lequel les données de guidage ($X_g$) sont au moins égales à l'une des données suivantes : la position horizontale, la déviation latérale, la déviation rectilinéaire latérale, la déviation verticale, la déviation rectilinéaire verticale ou la distance au seuil de piste.

5. Dispositif de réception de signaux de radio-navigation (401,601) selon l'une des revendications précédentes dans lequel le moyen de comparaison (435,423) exécute au préalable une étape de compensation, sur la donnée de guidage de position horizontale, de l'asynchronisme entre le premier module GNSS maitre (403) et le second module GNSS esclave.

6. Dispositif de réception de signaux de radio-navigation (401,601) selon la revendication 5 dans lequel l'asynchronisme est compensé en calculant la différence ΔPOS des positions horizontales $P_a$,$P_b$ fournies par les premier et second moyen de calcul de données de guidage (434,422) comme suit :

$$\Delta POS = P_b - P_a - V_a.(T_b - T_a)$$

avec $V_a$ une mesure de vitesse fournie par le premier moyen de calcul de données de guidage (434), $T_a$ une mesure de temps fournie par le premier moyen de calcul de données de guidage (434) et $T_b$ une mesure de temps fournie par le second moyen de calcul de données de guidage (422).

7. Dispositif de réception de signaux de radio-navigation (401,601) selon la revendication 5 dans lequel l'asynchronisme est compensé en synchronisant, les données de guidage ($X_{g1}$ ,$X_{g2}$) calculées sur une composante caractéristique du signal de radio-navigation reçu.

8. Dispositif de réception de signaux de radio-navigation (401,601) selon l'une des revendications précédentes dans lequel les premier et second modules GNSS (403,402) présentent une dissimilarité matérielle et/ou logicielle.

9. Dispositif de réception de signaux de radio-navigation (401,601) selon l'une des revendications 1 à 7 dans lequel les premier et second modules GNSS (403,402) sont similaires matériellement mais mettent en oeuvre les traitements numériques dissimilaires suivants : filtrages numériques différents, corrélateurs différents, allocation de plans de fréquences différents.

10. Dispositif de réception de signaux de radio-navigation (401,601) selon l'une des revendications 8 ou 9 dans lequel le dispositif comprend une antenne (811,812) et un préamplificateur (721,722) distincts pour alimenter chaque module GNSS (403,402) de sorte à limiter les sources communes de défaut d'intégrité.

11. Dispositif de réception de signaux de radio-navigation (401,601) selon la revendication 10 dans lequel le test d'intégrité est modifié comme suit :

$$\left| X_{g1} - X_{g2} \right| > K_g.\sqrt{Variance(X_{g1} - X_{g2})} + b$$

avec b un biais de mesure calculé à partir de la connaissance a priori de la distance entre les deux antennes (811,812).

12. Dispositif de réception de signaux de radio-navigation (401,601) selon l'une des revendications 8 ou 9 dans lequel le dispositif comprend une antenne (831), un moyen de division (832) de la puissance du signal reçu par l'antenne (831) et deux préamplificateurs distincts (833,834) pour alimenter chaque module GNSS (403,402) de sorte à limiter les sources communes de défaut d'intégrité.

13. Récepteur multimode pour l'aide à la navigation d'un aéronef comprenant un système d'atterrissage aux instruments ILS et un dispositif de réception de signaux de radio-navigation (401,601) selon l'une des revendications 1 à 12 pour la mise en oeuvre d'une fonction d'aide à l'atterrissage GLS en phase d'approche.

14. Système hybride d'aide à la navigation comprenant un récepteur multimode (501) comprenant un système d'atterrissage aux instruments ILS et un système inertiel (502) à hybridation GNSS-IRS comprenant un système inertiel IRS (504) produisant des données inertielles et un moyen d'hybridation (503) de données de navigation GNSS par lesdites données inertielles, **caractérisé en ce qu'**il comporte en outre un dispositif de réception de signaux de radio-navigation selon l'une des revendications 1 à 12 dont le premier module GNSS maitre (403) est intégré dans ledit système inertiel (502) pour fournir lesdites données de navigation GNSS et le second module GNSS esclave (402) est intégré dans ledit récepteur multimode (501).

**Patentansprüche**

1. Vorrichtung für den Empfang von Funknavigationssignalen (401, 601) zur Unterstützung der Steuerung eines Luftfahrzeugs, **dadurch gekennzeichnet, dass** sie ein erstes GNSS-Mastermodul (403) und ein zweites GNSS-Slavemodul (402) umfasst, die ungleichartig sind, wobei das erste GNSS-Mastermodul (403) ein erstes Verarbeitungsmittel der Funknavigationssignale (431) und ein erstes Berechnungsmittel (434) von Lenkdaten ($X_g$) auf der Basis von Messungen, die von dem ersten Signalverarbeitungsmittel (431) geliefert werden, umfasst, wobei das zweite GNSS-Slavemodul (402) ein zweites Verarbeitungsmittel der Funknavigationssignale (421) und ein zweites Berechnungsmittel (422) von Lenkdaten ($X_g$) auf der Basis von Messungen, die von dem zweiten Signalverarbeitungsmittel (421) geliefert werden, umfasst, wobei jedes GNSS-Modul (403, 402) ferner ein Vergleichsmittel (435, 423) zwischen den Ausgängen $X_{g1}$, $X_{g2}$ des ersten und zweiten Lenkdaten-Berechnungsmittels (434, 422) umfasst, das ausgebildet ist, um den folgenden Integritätstest durchzuführen:

$$\left| X_{g1} - X_{g2} \right| > K_g \sqrt{Varianz(X_{g1} - X_{g2})}$$

und auf einen Integritätsfehler zu schließen, wenn der Integritätstest verifiziert ist,
wobei Kg eine Detektionsschwelle ist, die derart vorbestimmt ist, dass man eine bestimmte Detektionswahrscheinlichkeit $P_{nd}$ eines Fehlers, der die eine oder die andere oder die zwei Messungen $X_{g1}$, $X_{g2}$ gleichzeitig beeinflusst, und eine bestimmte Fehlalarmwahrscheinlichkeit $P_{fa}$, erhält.

2. Vorrichtung für den Empfang von Funknavigationssignalen (401, 601) nach Anspruch 1, wobei die Detektionsschwelle Kg auf der Basis der zwei folgenden Ungleichungen bestimmt wird:

$$\int_{K_g}^{\infty} \frac{1}{\sqrt{2\pi}} e^{-\frac{x^2}{2}} .dx \le P_{fa}$$

und

$$P_{nd} \le \int_{-\infty}^{K_g \frac{VAL}{\sqrt{\max\left(Varianz\ (X_{g1}),\ Varianz\ (X_{g2})\right) - Kovarianz\ (X_{g1}, X_{g2})}}} \frac{1}{\sqrt{2\pi}} e^{-\frac{u^2}{2}} .du,$$

wobei VAL der tolerierbare Fehlergrenzwert für eine der Messungen $X_{g1}$, $X_{g2}$ ist, unter dem die Integrität der Messungen garantiert ist.

3. Vorrichtung für den Empfang von Funknavigationssignalen (401, 601) nach einem der vorangehenden Ansprüche, wobei die zwischen dem ersten GNSS-Mastermodul (403) und dem zweiten GNSS-Slavemodul gemeinsamen Fehlerquellen von der Varianzberechnung der Differenz zwischen den Ausgängen $X_{g1}$, $X_{g2}$ des ersten und zweiten Lenkdaten-Berechnungsmittels (434, 422) beseitigt werden.

4. Vorrichtung für den Empfang von Funknavigationssignalen (401, 601) nach einem der vorangehenden Ansprüche, wobei die Lenkdaten ($X_g$) mindestens gleich einer der folgenden Daten sind: die horizontale Position, die Seitenablenkung, die geradlineare Seitenablenkung, die vertikale Ablenkung, die vertikale geradlineare Ablenkung oder der Abstand zur Pistenschwelle.

5. Vorrichtung für den Empfang von Funknavigationssignalen (401, 601) nach einem der vorangehenden Ansprüche, wobei das Vergleichsmittel (435, 423) auf die Lenkdaten der horizontalen Position zuvor einen Schritt des Ausgleichs des Asynchronismus zwischen dem ersten GNSS-Mastermodul (403) und dem GNSS-Slavemodul durchführt.

6. Vorrichtung für den Empfang von Funknavigationssignalen (401, 601) nach Anspruch 5, wobei der Asynchronismus durch Berechnung der Differenz $\Delta POS$ der horizontalen Positionen $P_a$, $P_b$ ausgeglichen wird, die von dem ersten und zweiten Lenkdaten-Berechnungsmittel (434, 422) wie folgt bereitgestellt werden:

$$\Delta POS = P_b - P_a - V_a.(T_b - T_a)$$

wobei $V_a$ eine von dem ersten Lenkdaten-Berechnungsmittel (434) bereitgestellte Geschwindigkeitsmessung ist, $T_a$ eine von dem ersten Lenkdaten-Berechnungsmittel (434) bereitgestellte Zeitmessung ist und $T_b$ eine von dem zweiten Lenkdaten-Berechnungsmittel (422) bereitgestellte Zeitmessung ist.

7. Vorrichtung für den Empfang von Funknavigationssignalen (401, 601) nach Anspruch 5, wobei der Asynchronismus durch Synchronisierung der auf einer charakteristischen Komponente des empfangenen Funknavigationssignals berechneten Lenkdaten ($X_{g1}$, $X_{g2}$) ausgeglichen wird.

8. Vorrichtung für den Empfang von Funknavigationssignalen (401, 601) nach einem der vorangehenden Ansprüche, wobei das erste und zweite GNSS-Modul (403, 402) eine Hard- und/oder Softwareungleichartigkeit aufweisen.

9. Vorrichtung für den Empfang von Funknavigationssignalen (401, 601) nach einem der Ansprüche 1 bis 7, wobei das erste und zweite GNSS-Modul (403, 402) materiell ähnlich sind, aber folgende ungleichartige digitale Verarbeitungen durchführen: unterschiedliche digitale Filterungen, unterschiedliche Korrelatoren, Zuweisung unterschiedlicher Frequenzebenen.

10. Vorrichtung für den Empfang von Funknavigationssignalen (401, 601) nach einem der Ansprüche 8 oder 9, wobei die Vorrichtung eine Antenne (811, 812) und einen separatenvorverstärker (721, 722) umfasst, um jedes GNSS-Modul (403, 402) derart zu versorgen, dass die gemeinsamen Integritätsfehlerquellen begrenzt werden.

11. Vorrichtung für den Empfang von Funknavigationssignalen (401, 601) nach Anspruch 10, wobei der Integritätstest wie folgt modifiziert wird:

$$\left| X_{g1} - X_{g2} \right| > K_g \cdot \sqrt{Varianz\ (X_{g1} - X_{g2})} + b \quad ,$$

mit $b$ als systematischer Messfehler, berechnet auf der Basis der apriorischen Kenntnis des Abstands zwischen den zwei Antennen (811, 812).

12. Vorrichtung für den Empfang von Funknavigationssignalen (401, 601) nach einem der Ansprüche 8 oder 9, wobei die Vorrichtung eine Antenne (831), ein Divisionsmittel (832) der Leistung des von der Antenne (831) empfangenen Signals und zwei separate Vorverstärker (833, 834) umfasst, um jedes GNSS-Modul (403, 402) derart zu versorgen, dass die gemeinsamen Integritätsfehlerquellen begrenzt werden.

13. Multimodalempfänger als Navigationshilfe für ein Luftfahrzeug, das ein Landesystem mit ILS-Instrumenten und eine Vorrichtung für den Empfang von Funknavigationssignalen (401, 601) nach einem der Ansprüche 1 bis 12 für die Umsetzung einer GLS-Landungshilfsfunktion in der Annäherungsphase umfasst.

14. Hybridsystem als Navigationshilfe, das einen Multimodalempfänger (501) umfasst, der ein Landesystem mit ILS-Instrumenten und ein Inertialsystem (502) für GNSS-IRS-Hybridation umfasst, das ein Inertialdaten produzierendes IRS-Inertialsystem (504) und ein GNSS-Navigationsdaten-Hybridationsmittel (503) durch die Inertialdaten umfasst, **dadurch gekennzeichnet, dass** es ferner eine Vorrichtung für den Empfang von Funknavigationssignalen nach einem der Ansprüche 1 bis 12 umfasst, deren erstes GNSS-Mastermodul (403) in das Intertialsystem (502) integriert ist, um die GNSS-Navigationsdaten zu liefern, und deren zweites GNSS-Slavemodul (402) in den Multimodelempfänger (501) integriert ist.

**Claims**

1. A device for receiving radio-navigation signals (401, 601) for assisting in the piloting of an aircraft, **characterised in that** it comprises a first master GNSS module (403) and a second slave GNSS module (402), which modules are dissimilar, said first master GNSS module (403) comprising a first means (431) for processing radio-navigation signals and a first means (434) for calculating guidance data ($X_g$) on the basis of measurements provided by said first signal processing means (431), said second slave GNSS module (402) comprising a second means (421) for processing radio-navigation signals and a second means (422) for calculating guidance data ($X_g$) on the basis of measurements provided by said second signal processing means (421), each GNSS module (403, 402) further comprising means (435, 423) for comparing between the outputs $X_{g1}$, $X_{g2}$ of said first and second means (434, 422) for calculating guidance data that are designed to execute the following integrity test:

$$\left| X_{g1} - X_{g2} \right| > K_g \sqrt{Variance(X_{g1} - X_{g2})}$$

and for concluding with an integrity fault if said integrity test is confirmed,
with Kg being a predetermined detection threshold so as to obtain a given probability $P_{nd}$ of detecting an error affecting one or the other or both of the measurements $X_{g1}$, $X_{g2}$ simultaneously and a given false alarm probability $P_{fa}$.

2. The device for receiving radio-navigation signals (401, 601) according to claim 1, wherein said detection threshold Kg is determined on the basis of the following two inequalities:

$$\int_{K_g}^{\infty} \frac{1}{\sqrt{2\pi}} e^{-\frac{x^2}{2}} .dx \leq P_{fa}$$

$$VAL$$

and

$$P_{nd} \leq \int_{-\infty}^{\frac{K_g}{\sqrt{max(Variance(X_{g1}),Variance(X_{g2}))-Covariance(X_{g1},X_{g2})}}} \frac{1}{\sqrt{2\pi}} e^{-\frac{u^2}{2}} .du \quad,$$

with VAL being the tolerated error limit value on one of the measurements $X_{g1}$, $X_{g2}$, above which the integrity of said measurements is guaranteed.

3. The device for receiving radio-navigation signals (401, 601) according to any one of the preceding claims, wherein the common sources of error between said first master GNSS module (403) and said second slave GNSS module are eliminated from the calculation of the variance of the difference between the outputs $X_{g1}$, $X_{g2}$ of said first and second guidance data calculation means (434, 422).

4. The device for receiving radio-navigation signals (401, 601) according to any one of the preceding claims, wherein said guidance data ($X_g$) is at least equal to one of the following items of data: the horizontal position, the lateral deviation, the lateral rectilinear deviation, the vertical deviation, the vertical rectilinear deviation or the distance to the runway threshold.

5. The device for receiving radio-navigation signals (401, 601) according to any one of the preceding claims, wherein said comparison means (435, 423) previously executes a step of compensating, on the horizontal position guidance data, the asynchronism between said first master GNSS module (403) and said second slave GNSS module.

6. The device for receiving radio-navigation signals (401, 601) according to claim 5, wherein the asynchronism is compensated by calculating the difference $\Delta POS$ of the horizontal positions $P_a$, $P_b$ provided by the first and second guidance data calculation means (434, 422) as follows:

$$\Delta POS = P_b - P_a - V_a.(T_b\text{-}T_a)$$

with $V_a$ being a speed measurement provided by said first guidance data calculation means (434), $T_a$ being a time measurement provided by said first guidance data calculation means (434) and $T_b$ being a time measurement provided by said second guidance data calculation means (422).

7. The device for receiving radio-navigation signals (401, 601) according to claim 5, wherein the asynchronism is compensated by synchronising the guidance data ($X_{g1}$, $X_{g2}$) calculated on a characteristic component of the received radio-navigation signal.

8. The device for receiving radio-navigation signals (401, 601) according to any one of the preceding claims, wherein said first and second GNSS modules (403, 402) have a hardware and/or software dissimilarity.

9. The device for receiving radio-navigation signals (401, 601) according to any one of claims 1 to 7, wherein said first and second GNSS modules (403, 402) are similar in terms of hardware but implement the following dissimilar digital processing: different digital filtering, different correlators, allocation of different frequency planes.

10. The device for receiving radio-navigation signals (401, 601) according to claim 8 or 9, wherein said device comprises an antenna (811, 812) and a separate pre-amplifier (721, 722) to feed each GNSS module (403, 402) so as to limit the common sources of integrity faults.

11. The device for receiving radio-navigation signals (401, 601) according to claim 10, wherein said integrity test is modified as follows:

$$\left| X_{g1} - X_{g2} \right| > K_g \sqrt{Variance(X_{g1} - X_{g2})} + b$$

with b being a measurement bias calculated on the basis of the a priori knowledge of the distance between the two antenna (811, 812).

12. The device for receiving radio-navigation signals (401, 601) according to claim 8 or 9, wherein said device comprises an antenna (831), a means (832) for splitting the power of the signal received by said antenna (831) and two separate pre-amplifiers (833, 834) for feeding each GNSS module (403, 402) so as to limit the common sources of integrity faults.

13. A multi-mode receiver for assisting the navigation of an aircraft comprising an instrument landing system (ILS) and a device for receiving radio-navigation signals (401, 601) according to any one of claims 1 to 12 for implementing a function for assisting in GLS landing during an approach phase.

14. A hybrid navigation assistance system comprising a multi-mode receiver (501) comprising an instrument landing system (ILS) and an inertial system (502) for GNSS-IRS hybridisation comprising an IRS inertial system (504) producing inertial data and a means (503) for the hybridisation of GNSS navigation data by said inertial data, **characterised in that** it further comprises a device for receiving radio-navigation signals according to any one of claims 1 to 12, the first master GNSS module (403) of which is integrated into said inertial system (502) so as to provide said GNSS navigation data and said second slave GNSS module (402) is integrated into said multi-mode

receiver (501).

Antenne de réception des
signaux GNSS

102

103

Amplification et filtrage

101

Récepteur GNSS

111

121

Fonction de Navigation

112

122

Fonction d'approche

113

Surveillance

Corrections issues de la station
sol GBAS

105

Décodeur VDB

104

Antenne VHF de réception des
signaux GBAS

FIG.1

EP 2 648 017 B1

Antenne de réception des
signaux GNSS

102

103

Amplification et
filtrage

101

121

201

Récepteur GNSS

111

Fonction de Navigation

Fonction d'approche

212

112

Fonction d'approche

Comparateur

213

Corrections issues de
la station sol GBAS

Comparateur

211

214

105

104

Décodeur VDB

Surveillance Allégée

Surveillance Allégée

215

Antenne VHF de réception des
signaux GBAS

FIG.2

EP 2 648 017 B1

FIG.3

308
Décodage VDB
Messages GBAS

Antenne VHF/UHF
302

Chaîne principale ILS
303

306

Ecarts de guidage GBAS
310

Module RF ILS
301

Interrupteur sorties ILS
305

Interrupteur sorties ILS/GLS/SLS
312

Ecarts de guidage SBAS
311

Position pour navigation
313

Chaîne dissimilaire ILS
304

xLS

314

Sorties pour navigation

Traitement du signal et données

307

309

Antenne active

EP 2 648 017 B1

29

FIG.4

Antenne VHF/UHF

302

301 — Module RF ILS

303 — Chaîne principale ILS

304 — Chaîne dissimilaire ILS

305 — Interrupteur sorties ILS

308 — Décodage VDB

Messages GBAS

312 — Interrupteur sorties ILS/GLS/SLS

xLS

314 — Sorties pour navigation

405 — Interrupteur sorties GLS

402 — Traitement du signal

401

421 — Ecarts de guidage GBAS — 422

Comparateur

423

435 — Comparateur

Ecarts de guidage GBAS — 434

Ecarts de guidage SBAS — 433

Position pour navigation — 432

Traitement du signal et données

404 — Antenne active

403

431

EP 2 648 017 B1

FIG.5

FIG.6

EP 2 648 017 B1

FIG.7

FIG.8 a

FIG.8b

FIG.8c

EP 2 648 017 B1

FIG.9

EP 2 648 017 B1

## RÉFÉRENCES CITÉES DANS LA DESCRIPTION

**Documents brevets cités dans la description**

*   US 5945943 A